# EUROPEAN PATENT SPECIFICATION

(11) **EP 4 499 753 B1**
(45) Date of publication and mention of the grant of the patent: **08.10.2025**
(21) Application number: 23732533.7
(22) Date of filing: 13.06.2023
(51) Int. Cl.: C08L 83/04

(54) **THERMALLY CONDUCTIVE SILICONE COMPOSITION AND METHOD FOR PRODUCING THERMALLY CONDUCTIVE MEMBER USING THE COMPOSITION**
WÄRMELEITFÄHIGE SILIKONZUSAMMENSETZUNG UND VERFAHREN ZUR HERSTELLUNG EINES WÄRMELEITFÄHIGEN ELEMENTS UNTER VERWENDUNG DER ZUSAMMENSETZUNG
COMPOSITION DE SILICONE THERMOCONDUCTRICE ET PROCÉDÉ PERMETTANT LA PRODUCTION D'UN ÉLÉMENT THERMOCONDUCTEUR À L'AIDE DE LA COMPOSITION

(30) Priority: 15.06.2022 JP 2022096680
(43) Date of publication of application: 05.02.2025
(73) Proprietor: Wacker Chemie AG, 81671 München (DE)
(72) Inventor: SAKAI, Kazuya, Chikusei-shi, Ibaraki 300--4522 (JP); YAMADA, Shunsuke, Chikusei-shi, Ibaraki 300--4522 (JP)
(74) Representative: Mieskes, Klaus Theoderich
(86) International application number: PCT/EP2023/065809
(87) International publication number: WO 2023/242193

(56) References cited:
- JP-A- 2011 089 079
- US-A1- 2017 349 801

## Description

### Technical Field

The present invention relates to a curable thermally conductive silicone composition containing a thermally conductive filler and a dimethylpolysiloxane containing a predetermined silanol group, and a method for producing a thermally conductive member using the composition.

### Background Art

As electronic components become smaller, higher in performance, and higher in output, the emitted thermal energy increases, and the temperature of the electronic components tends to increase. In recent years, along with the popularization of environmentally friendly electric vehicles, high-performance batteries have been developed. In view of this background, various heat dissipation silicone products (heat dissipation sheets, heat dissipation greases, heat dissipation gap fillers, and the like) have been developed for transferring heat generated by a heat generating body such as electronic components and batteries to a heat dissipation member such as a heat sink.

A heat dissipation sheet has excellent shape maintainability after curing and excellent handleability. However, the heat dissipation sheet is more difficult to be produced into a thin film as compared with a grease and a gap filler and has inferior flexibility after curing, and thus contact thermal resistance of the heat dissipation sheet with the heat dissipation member tends to increase. A heat dissipation grease has excellent flexibility and tends to achieve low thermal resistance, but encounters a problem of a resistance against the pump-out phenomenon due to non-curing. From this standpoint, a further improvement in performance is desired and there has been particular interest in a gap filler as a material having high flexibility before curing, curing properties, pump-out resistance, and low thermal resistance.

The gap filler that is one mode of the thermally conductive member is obtained by curing a curable thermally conductive silicone composition. When a thermally conductive filler is mixed in the composition, high heat dissipation properties can be imparted to the gap filler obtained by curing. In particular, a large amount of thermally conductive filler having a relatively small specific surface area (for example, a spherical thermally conductive filler) can be mixed in a polymer. For example, the thermally conductive filler is an important component for obtaining the thermally conductive member having a high thermal conductivity of 2.0 W/m·K or higher. However, the spherical thermally conductive filler is likely to precipitate in the thermally conductive silicone composition, and thus encounters problems with long-term storage stability.

In addition to favorable heat dissipation properties, the thermally conductive member is desired to be able to reduce the impact applied to electronic parts, batteries, heat dissipation member, or the like when impact is applied to a vehicle body. Thus, there is a need for a thermally conductive member having high flexibility.

It is thought that in order to obtain a thermally conductive member having high flexibility, a low viscosity polymer should be mixed in the thermally conductive silicone composition. However, a problem occurs in that the thermally conductive filler in the thermally conductive silicone composition is likely to precipitate with time. When the thermally conductive filler precipitates, the chemical composition of the thermally conductive silicone composition becomes uneven, and thus the quality of the obtained thermally conductive member may also vary.

Various methods for preventing precipitation of the thermally conductive filler thus have been developed.

For example, PTL 1 discloses a thermally conductive silicone composition in which a thermally conductive filler containing 70% by mass or more of aluminum hydroxide is mixed to suppress the precipitation of the thermally conductive filler. However, the flexibility of cured products to be obtained therefrom is insufficient.

PTL 2 discloses a silicone composition containing a liquid silicone, an insoluble function-imparting filling material such as a thermally conductive filling material or a conductive filling material, and a thickening-suppressing precipitation-preventing material such as a non-liquid cellulose-based compound or a polysaccharide or a nonthickening precipitation-preventing material. During exposure to high temperatures however, polysaccharides are thermally decomposed, and thus flexibility and thermal conductivity may be reduced. Thus, a problem occurs with the low heat resistance to thermal decomposition during exposure to high temperature.

US2017/349801 A1 discloses a thermally conductive composition comprising A) an organopolysiloxane with Si-bonded alkenyl terminal groups, B) a branched organohydrogenpolysiloxane with at least two Si-bonded alkenyl groups, C) a thermally conductive filler in a ternary mixture of particle sizes (50-500 µm, 0.5-200 µm & 10-2000 nm), being typically alumina, D) an organohydrogenpolysiloxane with at least two hydrosilyl groups, E) an addition reaction catalyst, F) a hydroxy-containing polysiloxane and G) an alkoxy-containing siloxane. Citation List

### Patent Literature

PTL 1: Japanese Patent Application Laid-Open No. 2011-089079
PTL 2: WO2016/103424

### Summary Of Invention

### Technical Problem

In such a circumstance, an object of the present invention is to provide a thermally conductive silicone composition for obtaining a thermally conductive member having high flexibility and excellent heat dissipation properties, the thermally conductive silicone composition having excellent storage stability and heat resistance.

### Solution To Problem

The present inventors have found that when a silicone composition containing an organopolysiloxane contains a thermally conductive filler having a predetermined BET specific surface area and a predetermined average particle diameter, and also contains a silanol group-containing organopolysiloxane having a viscosity, at 25°C, of 10 mPa·s or more and 500 mPa·s or less, the problems of the present invention can be solved. The present invention has thus been completed.

A thermally conductive silicone composition according to the present invention is a thermally conductive silicone composition containing:
a component (A) that is an alkenyl group-containing organopolysiloxane;
a component (B) that is an organopolysiloxane having two or more hydrosilyl groups within one molecule;
a component (C) that is a silanol group-containing organopolysiloxane having a viscosity, at 25°C, of 10 mPa·s or more and 500 mPa·s or less, and wherein a content of the component (C) is 5 parts by mass or more and 100 parts by mass or less relative to 100 parts by mass of the total amount of the components (A) and (B), and the content of the silanol groups in the component (C) is 1% by mass to 8% by mass relative to 100% by mass of the total content of the component (C);
a component (D) that is an addition reaction catalyst;
a component (E) that is at least one or more types of thermally conductive filler selected from the group consisting of a metal, a metal oxide, a metal hydroxide, a metal nitride, and a metal carbide, the thermally conductive filler having a BET specific surface area of 30 m²/g or less and an average particle diameter of 1 to 100 µm; and
a component (F) that is a cross-linking agent, wherein
the content of a filler having a BET specific surface area of 50 m²/g or more in the composition is 3 parts by mass or less relative to 100 parts by mass of a total amount of the components (A) and (B).

The thermally conductive silicone composition of the present invention (hereinafter simply referred to as composition) is a composition for forming a thermally conductive member disposed on a surface of a substrate that is a heat generating body or the like. Examples of the form of the thermally conductive member include a gap filler.

The alkenyl group-containing organopolysiloxane (A), and the organopolysiloxane having two or more hydrosilyl groups within one molecule (B) in the thermally conductive silicone composition are subjected to a cross-linking reaction in the presence of the addition reaction catalyst (D), resulting in curing. The silanol group-containing organopolysiloxane having a viscosity, at 25°C, of 10 mPa·s or more and 500 mPa·s or less (C) has neither a hydrosilyl group nor an alkenyl group so as to not contribute to the cross-linking reaction. This can improve the flexibility of the cured product.

Furthermore, the inventors have found that when the component (C) is mixed, an effect of suppressing the precipitation of the thermally conductive filler in the composition is higher than in a case where an organopolysiloxane having no silanol group is mixed. This higher suppression is considered to be due to the compatibility of the components (A) and (B) being favorable since an OH group on the surface of the thermally conductive filler and the silanol group of the component (C) form a hydrogen bond and also since the component (C) has an organopolysiloxane skeleton.

In particular, when a silanol group-containing organopolysiloxane having a viscosity, at 25°C, of 500 mPa·s or less is mixed, the composition thus obtained can exhibit a sufficiently high effect of improving flexibility of a cured product and a sufficiently high effect of suppressing the precipitation of the thermally conductive filler. More specifically, a thermally conductive silicone composition is obtained, this composition which forms a gap filler having a needle penetration in accordance with JIS K 6249 of 10 or more and extremely high flexibility and which has a high storage stability in which a difference of 0.2 or less in specific gravity between an upper portion and a lower portion of the composition after 1000-hour storage at room temperature.

The organopolysiloxane having a low viscosity of 500 mPa·s or less has a low degree of polymerization, and thus the density of the hydrogen bond described above is increased. Therefore, it is considered that this organopolysiloxane exhibits a higher effect than a silanol group-containing organopolysiloxane having a high viscosity.

### Advantageous Effects of Invention

As described above, the thermally conductive silicone composition according to the present invention has high storage stability, and the thermally conductive member obtained by curing the thermally conductive silicone composition has excellent flexibility. Therefore, the obtained thermally conductive member has stable quality over an extended period of time. When the thermally conductive member is used as a gap filler applied to a heat dissipation member for members, such as a battery, to be mounted in an automobile body, mechanical impact to the heat dissipation member from the outside can be reduced.

### Description Of Embodiments

Hereinafter, a thermally conductive silicone composition, a method for producing the composition, and a method for producing a thermally conductive member using the composition, according to the present invention will be described in detail.

A thermally conductive silicone composition according to the present invention is a thermally conductive silicone composition containing:
a component (A) that is an alkenyl group-containing organopolysiloxane;
a component (B) that is an organopolysiloxane having two or more hydrosilyl groups within one molecule;
a component (C) that is a silanol group-containing organopolysiloxane having a viscosity, at 25°C, of 10 mPa·s or more and 500 mPa·s or less, and wherein a content of the component (C) is 5 parts by mass or more and 100 parts by mass or less relative to 100 parts by mass of the total amount of the components (A) and (B), and the content of the silanol groups in the component (C) is 1% by mass to 8% by mass relative to 100% by mass of the total content of the component (C);
a component (D) that is an addition reaction catalyst;
a component (E) that is at least one or more types of thermally conductive filler selected from the group consisting of a metal, a metal oxide, a metal hydroxide, a metal nitride, and a metal carbide, the thermally conductive filler having a BET specific surface area of 30 m²/g or less and an average particle diameter of 1 to 100 µm; and
a component (F) that is a cross-linking agent, wherein
the content of a filler having a BET specific surface area of 50 m²/g or more in the composition is 3 parts by mass or less relative to 100 parts by mass of the total amount of the components (A) and (B).

When a silanol group-containing organopolysiloxane having a viscosity, at 25°C, of 10 mPa·s or more and 500 mPa·s or less as the component (C) is added to a composition containing the components (A), (B), (D), and (E) described above, flexibility of the thermally conductive member obtained by curing the composition can be improved. Furthermore, the phenomenon of precipitation of the thermally conductive filler during storage of the composition can be suppressed, so that the storage stability of the composition can be improved.

The thermally conductive silicone composition of the present invention may be any composition so long as the composition can form a thermally conductive member, and examples of the thermally conductive member include a gap filler applied on a heat generating body such as a battery of a vehicle and on a film covering such a heat generating body.

The thermally conductive silicone composition of the present invention in a liquid state before curing is applied to a substrate, and cured to give a thermally conductive member.

### Component (A):

The component (A), which is the main component of the thermally conductive silicone composition, is an organopolysiloxane having an alkenyl group bonded to a silicon atom.

The viscosity and the degree of polymerization of the component (A) are not particularly limited, and can be selected according to the required mixing viscosity of the thermally conductive silicone composition and the like, and the viscosity at 25°C may be, for example, 10 mPa·s or more and 10,000 mPa·s or less.

As the organopolysiloxane, one type thereof may be used alone, or two or more types thereof may be used in combination as appropriate. The organopolysiloxane is the main component of the thermally conductive silicone composition and has at least 2 alkenyl group bonded to a silicon atom within one molecule on average, preferably 2 to 50 alkenyl groups, and more preferably 2 to 20 alkenyl groups.

The component (A) does not have a molecular structure that is specifically limited, and may have, for example, a linear structure, a partially branched linear structure, a branched chain structure, a cyclic structure, or a branched cyclic structure. Among these, the component (A) is preferably a substantially linear organopolysiloxane, and specifically, the component (A) can be a linear diorganopolysiloxane in which the molecular chain is mainly composed of a diorganosiloxane repeat unit and of which both terminals of the molecular chain are blocked with a triorganosiloxy group. Some or all of the molecular chain terminals, or some of the side chains, may be a silanol group.

The position of the alkenyl group bonded to the silicon atom in the component (A) is not particularly limited, and the component (A) may be a organopolysiloxane having an alkenyl group bonded to a silicon atom at both molecular chain terminals. The diorganopolysiloxane having one alkenyl group at each terminal of the molecular chain has an advantage in that the content of the alkenyl groups serving as the reaction point of the cross-linking reaction is small and the flexibility of the gap filler obtained after curing is enhanced.

The alkenyl group may be bonded to the silicon atom at the molecular chain terminal, to the silicon atom at a non-terminal molecular chain site (in the middle of the molecular chain), or to both.

The component (A) may be a polymer composed of a single type of siloxane unit or a copolymer composed of two or more types of siloxane units.

The viscosity of the component (A) at 25°C is 10 mPa·s or more and 10,000 mPa·s or less, preferably 20 mPa·s or more and 5,000 mPa·s or less, and more preferably 30 mPa·s or more and 2,000 mPa·s or less.

When the viscosity falls within the above-mentioned viscosity range, it is possible to suppress the phenomenon that the component (E) is likely to precipitate in the obtained liquid composition due to the too-low viscosity of the component (A). Therefore, a thermally conductive silicone composition excellent in long-term storage stability can be obtained. In addition, when the viscosity thereof falls within the above-described viscosity range, the obtained thermally conductive silicone composition can have an appropriate fluidity, and thus the dischargeability can be increased and the productivity can be increased. In addition, it is possible to increase the flexibility of the thermally conductive member obtained by curing the thermally conductive silicone composition.

In order to adjust the viscosity (mixing viscosity), before curing, of the thermally conductive silicone composition that is obtained by mixing the liquid compositions, two or more types of organopolysiloxanes having an alkenyl group and having different viscosities can also be used in combination.

In order to ensure both appropriate fluidity of the thermally conductive silicone composition and flexibility of the thermally conductive member obtained by curing the composition, the component (A) preferably contains no diorganopolysiloxane having a viscosity, at 25°C, of 100,000 mPa·s or more, and more preferably does not contain 0.1 parts by mass or more of the diorganopolysiloxane having a viscosity, at 25°C, of 50,000 mPa·s or more relative to 100 parts by mass of the total amount of the components (A) and (B) .

Specifically, the component (A) is represented by the following general formula (1) as an average composition formula:

R¹ₐSiO_{(4-a)/2} ... (1)

(In the formula (1), R¹s are the same as or different from each other and each are an unsubstituted or substituted monovalent hydrocarbon group having 1 to 18 carbon atoms, a is 1.7 to 2.1, preferably 1.8 to 2.5, and more preferably 1.95 to 2.05.).

In one embodiment, at least two or more of the monovalent hydrocarbon groups represented by the aforementioned R¹ are selected from alkenyl groups such as a vinyl group, an allyl group, a propenyl group, an isopropenyl group, a butenyl group, an isobutenyl group, a hexenyl group, and a cyclohexenyl group. Groups other than these groups are substituted or unsubstituted monovalent hydrocarbon groups having 1 to 18 carbon atoms. Specifically, the aforementioned R¹ is selected from the group consisting of an alkyl group such as a methyl group, an ethyl group, a propyl group, an isopropyl group, a butyl group, an isobutyl group, a tert-butyl group, a pentyl group, a neopentyl group, a hexyl group, a 2-ethylhexyl group, a heptyl group, an octyl group, a nonyl group, a decyl group, and a dodecyl group; a cycloalkyl group such as a cyclopentyl group, a cyclohexyl group, and a cycloheptyl group; an aryl group such as a phenyl group, a tolyl group, a xylyl group, a biphenyl group, and a naphthyl group; an aralkyl group such as a benzyl group, a phenylethyl group, a phenylpropyl group, and a methylbenzyl group; and a halogen-substituted or cyano-substituted alkyl group in which a part or all of hydrogen atoms in the above-described hydrocarbon groups have been substituted with a halogen atom, a cyano group, or the like, such as a chloromethyl group, a 2-bromoethyl group, a 3,3,3-trifluoropropyl group, a 3-chloropropyl group, and a cyanoethyl group.

R¹s to be selected preferably include, as the two or more alkenyl groups required, a vinyl group, an allyl group, a propenyl group, an isopropenyl group, a 2-methyl-1-propenyl group, a 2-methylallyl group or a 2-butenyl group, with a vinyl group being particularly preferred. R¹s other than the alkenyl group is preferably a methyl group or a phenyl group, with a methyl group being particularly preferred. In addition, it is preferable that 70 mol% or more of R¹s be a methyl group, in consideration of physical properties and economic efficiency of the cured product, and normally, it is preferable that 80 mol% or more of R¹s be a methyl group.

Specific examples of the molecular structure of the component (A) include a dimethylpolysiloxane with both molecular chain terminals blocked with a dimethylvinylsiloxy group, a dimethylsiloxane-methylphenylsiloxane copolymer with both molecular chain terminals blocked with a dimethylvinylsiloxy group, a dimethylsiloxane-methylvinylsiloxane copolymer with both molecular chain terminals blocked with a dimethylvinylsiloxy group, a dimethylsiloxane-methylvinylsiloxane-methylphyenylsiloxane copolymer with both molecular chain terminals blocked with a dimethylvinylsiloxy group, a dimethylsiloxane-methylvinylsiloxane copolymer with both molecular chain terminals blocked with a trimethylsiloxy group, an organopolysiloxane composed of a siloxane unit represented by the formula: (CH₃)₂ViSiO_{1/2}, a siloxane unit represented by the formula: (CH₃)₃SiO_{1/2}, and a siloxane unit represented by the formula: SiO_{4/2} (Vi in the formula represents a vinyl group), an organopolysiloxane in which part or all of the methyl groups in the above-mentioned organopolysiloxanes are substituted by an alkyl group such as an ethyl group or a propyl group, an aryl group such as a phenyl group or a tolyl group, and a halogenated alkyl group such as a 3,3,3-trifluoropropyl group, and mixtures of two or more of these organopolysiloxanes. From the viewpoint of enhancing elongation at the time of breakage of the cured product due to increased molecular chain length, a linear diorganopolysiloxane with a vinyl group at both molecular chain terminals is preferable.

These organopolysiloxanes may be commercially available or prepared by methods known to those skilled in the art.

The content of the organopolysiloxane as the component (A) relative to 100 parts by mass of the total amount of the components (A) and (B) in the thermally conductive silicone composition of the present invention is preferably 2 parts by mass or more and less than 90 parts by mass, and more preferably 10 parts by mass or more and 80 parts by mass or less. When the content falls within the aforementioned range, the viscosity of the whole thermally conductive silicone composition is within an appropriate range, and the thermally conductive silicone composition has excellent and more extended long-term storage stability, exhibits appropriate flowability, and can suppress a pump-out phenomenon. Therefore, a high thermal conductivity of the obtained thermally conductive member can be maintained.

Herein, the pump-out phenomenon is a phenomenon in which a thermally conductive silicone composition applied to a substrate such as a heat generating body or the thermally conductive member after curing flows out of a gap between the heat generating body and a heat dissipation body, generating cracks and voids. Before curing or during curing, at least a part of the thermally conductive silicone composition may flow. After the thermally conductive silicone composition is cured, the thermally conductive silicone composition may expand or shrink because of vibration or heat, resulting in a flowing out. In all cases of this phenomenon, the thermal resistance of the thermally conductive member increases, reducing heat dissipation properties.

### (Component (B))

The component (B) is an organopolysiloxane having two or more hydrogen atoms bonded to a silicon atom (two or more hydrosilyl groups).

The component (B) may have a viscosity and a degree of polymerization that are not limited to particular values and that can be selected according to the required mixing viscosity of the thermally conductive silicone composition. For example, the component (B) may have a viscosity, at 25°C, of 10 mPa·s or more and 10,000 mPa·s or less.

The component (B) is an organopolysiloxane having two hydrogen atoms bonded to silicon atoms within one molecule, and acts as a cross-linking agent for curing the thermally conductive silicone composition of the present invention.

The number of hydrogen atoms bonded to the silicon atom is not particularly limited as long as it is 2 or more, and may be 2 or more and 4 or less. It is particularly preferable that the component (B) that is linear have a hydrogen atom bonded to each silicon atom at both molecular chain terminals, and the component (B) may have two hydrogen atoms bonded to the same silicon atom within the molecule.

The component (B) may be any organopolysiloxane as long as it contains two hydrogen atoms bonded to silicon atoms (two hydrosilyl groups) within one molecule. Examples thereof that can be used include a methylhydrogenpolysiloxane, a dimethylsiloxane-methylhydrogensiloxane copolymer, a methylphenylsiloxane-methylhydrogensiloxane copolymer, a cyclic methylhydrogenpolysiloxane, and a copolymer composed of a dimethylhydrogensiloxy unit and an SiO_{4/2} unit. As the component (B), one type thereof may be used alone, or two or more types thereof may be used in combination as appropriate.

The molecular structure of the component (B) is not particularly limited, and may be, for example, a linear, branched, cyclic, or three-dimensional network structure. Specifically, the structure represented by the following average composition formula (2) can be used:

R³ₚH_{q}SiO_{(4-p-q)/2} (2)

(In the formula, R³ is an unsubstituted or substituted monovalent hydrocarbon group excluding an aliphatic unsaturated hydrocarbon group, p is 0 to 3.0, preferably 0.7 to 2.1, q is 0.0001 to 3.0, preferably 0.001 to 1.0, and p + q is a positive number satisfying 0.5 to 3.0, preferably 0.8 to 3.0.).

Examples of R³ in the formula (2) include nonsubstituted or halogen-substituted monovalent hydrocarbon groups and the like having 1 to 10 carbon atoms, preferably 1 to 8 carbon atoms, excluding an aliphatic unsaturated hydrocarbon group. Specific examples thereof include an alkyl group such as a methyl group, an ethyl group, a propyl group, a butyl group, a pentyl group, a hexyl group, an isopropyl group, an isobutyl group, a tert-butyl group, and a cyclohexyl group; an aryl group such as a phenyl group, a tolyl group, and a xylyl group; an aralkyl group such as a benzyl group and a phenethyl group; and an alkyl halide group such as a 3-chloropropyl group and a 3,3,3-trifluoropropyl group. Among these, a methyl group, an ethyl group, a propyl group, a phenyl group, and a 3,3,3-trifluoropropyl group are preferable, and a methyl group is particularly preferable.

Specific examples of the component (B) include 1,1,3,3-tetramethyldisiloxane, 1,3,5,7-tetramethylcyclotetrasiloxane, a methylhydrogencyclopolysiloxane, a methylhydrogensiloxanedimethylsiloxane cyclic copolymer, tris(dimethylhydrogensiloxy)methylsilane, tris(dimethylhydrogensiloxy)phenylsilane, a dimethylsiloxane-methylhydrogensiloxane copolymer with both molecular chain terminals blocked with a dimethylhydrogensiloxy group, a methylhydrogenpolysiloxane with both molecular chain terminals blocked with a dimethylhydrogensiloxy group, a methylhydrogenpolysiloxane with both molecular chain terminals blocked with a trimethylsiloxy group, a dimethylpolysiloxane with both molecular chain terminals blocked with a dimethylhydrogensiloxy group, a dimethylsiloxanediphenylsiloxane copolymer with both molecular chain terminals blocked with a dimethylhydrogensiloxy group, a dimethylsiloxane-methylhydrogensiloxane copolymer with both molecular chain terminals blocked with a trimethylsiloxy group, a dimethylsiloxane-diphenylsiloxanemethylhydrogensiloxane copolymer with both molecular chain terminals blocked with a trimethylsiloxy group, a dimethylsiloxane-methylhydrogensiloxane copolymer with both molecular chain terminals blocked with a dimethylhydrogensiloxy group, a copolymer of a H(CH₃)₂SiO_{1/2} unit and an SiO₂ unit, a copolymer of a H(CH₃)₂SiO_{1/2} unit, a (CH₃)₃SiO_{1/2} unit, and an SiO₂ unit, and mixtures of two or more of these organopolysiloxanes.

In the silicone composition described above, the content of the component (B) is preferably in such a range that the ratio of the number of hydrosilyl groups in the component (B) to that of the alkenyl groups in the component (A) falls within the range of 1/5 to 7, more preferably within the range of 1/3 to 2, and still more preferably within the range of 2/5 to 5/4. When the content of the component (B) falls within the aforementioned range, the thermally conductive silicone composition is sufficiently cured and the hardness of the entire thermally conductive silicone composition falls within a more preferable range, so that cracks are less likely to occur when the thermally conductive member, which is obtained by curing the thermally conductive silicone composition, is used as a gap filler. In addition to these, there is an advantage that the thermally conductive silicone composition dose not sag and can maintain its retention ability in the vertical direction even when the substrate, to which the composition has been applied, is disposed in a vertical orientation (erected).

The hydrosilyl group in the component (B) may be present at the molecular chain terminals, may be present in side chains, or may be present both at the molecular chain terminals and in the side chains. It is preferable to use a mixture of an organopolysiloxane having a hydrosilyl group only at the molecular chain terminals and an organopolysiloxane having a hydrosilyl group only in the side chain of the molecular chain.

The component (B) may be an organopolysiloxane having hydrogen atoms bonded only to silicon atoms at both molecular chain terminals. An organopolysiloxane having a hydrosilyl group at each of both molecular chain terminals has a low hydrosilyl group content, increasing flexibility of the thermally conductive member obtained after curing and further advantageously enhancing adhesion to the substrate.

The organopolysiloxane having a hydrosilyl group only at the molecular chain terminals has an advantage that the organopolysiloxane has high reactivity due to low steric hindrance, and the organopolysiloxane having a hydrosilyl group in the side chains contributes to network construction by a cross-linking reaction and thus has an advantage of improving the strength of the thermally conductive member. In order to impart flexibility to the heat conductive member after curing, an organopolysiloxane having a hydrosilyl group only at the molecular chain terminals is preferably used.

From the viewpoint of improving adhesion properties and heat resistance, the component (B) may include an organohydrogenpolysiloxane having a trimethylsiloxy group at both molecular chain terminals of the organohydrogenpolysiloxane and at least one aromatic group contained within the molecule. For economic reasons, the aromatic group is more preferably a phenyl group. An aromatic group-containing organohydrogenpolysiloxane and an aromatic group-free organohydrogenpolysiloxane may be used in combination.

The viscosity of the component (B) at 25°C is 10 mPa·s or more and 10,000 mPa·s or less, preferably 20 mPa·s or more and 5,000 mPa·s or less, and more preferably 30 mPa·s or more and 2,000 mPa·s or less.

In order to adjust the viscosity of the thermally conductive silicone composition, which is a final product, it is also possible to use two or more types of organopolysiloxanes having hydrogen atoms and having respective different viscosities. The mixing viscosity of the thermally conductive silicone composition may be in the range of 10 Pa·s or more and 1,000 Pa·s or less, more preferably in the range of 20 Pa·s or more and 500 Pa·s or less, and even more preferably in the range of 30 Pa·s or more and 250 Pa·s or less.

The content of the organopolysiloxane of the component (B), relative to 100 parts by mass of the total amount of the components (A) and (B) in the thermally conductive silicone composition of the present invention, is preferably 10 parts by mass or more and 98 parts by mass or less, and more preferably 20 parts by mass or more and 90 parts by mass or less. When the content falls within the aforementioned range, the hardness of the cured thermally conductive silicone composition can fall within an appropriate range. In addition, the thermally conductive member after curing can exhibit flexibility and robustness.

### Component (C):

The silanol group-containing organopolysiloxane having a viscosity, at 25°C, of 10 mPa·s or more and 500 mPa·s or less as the component (C) is to be added in order to improve storage stability of the thermally conductive silicone composition and also to improve flexibility and pump-out resistance of the thermally conductive member obtained by curing the composition.

The component (C) can be a compound that has neither an alkenyl group nor a hydrogen atom bonded to a silicon atom (hydrosilyl group). The component (C) may be a linear organopolysiloxane having at least one silanol group at each molecular chain terminal. If the component (C) has such a structure, the component (A) and the component (B) are not involved in the cross-linking reaction, and as a result, the flexibility of the thermally conductive member is improved.

The component (C) is an organopolysiloxane having at least two silanol groups (hydroxy groups bonded directly to a silicon atom within one molecule). Aside from the hydroxy group directly bonded to the silicon atom, the monovalent organic group is not particularly limited, and examples thereof include monovalent hydrocarbon groups having 1 to 10 carbon atoms. Specifically, example include an alkyl group such as a methyl group, an ethyl group, a propyl group, and a butyl group, a cycloalkyl group such as a cyclopentyl group and a cyclohexyl group, an aryl group such as a phenyl group and a naphthyl group, and an alkenyl group such as a vinyl group and a propenyl group. In the present invention, in particular, 80 mol % or more of the organic group other than the silanol group is preferably a methyl group. It is more preferable that the compound contain no alkenyl group. The molecular structure is also not particularly limited, and in principle, a linear structure is industrially preferable, and a branched structure may be used as well.

The viscosity, at 25°C, of the component (C) is preferably 10 mPa·s or more and 500 mPa·s or less, more preferably 30 mPa·s or more and 500 mPa·s or less.

The content of the silanol group in the component (C) may be 1% by mass or more and 8% by mass or less relative to 100% by mass of the total content of the component (C). The content of the silanol group is preferably 1% by mass or more and 5% by mass or less.

Here, the content of the silanol group is determined according to the formula of [mass of the silanol group in the molecule]/[total mass per one molecule of the component (C)] × 100 (mass %).

When the silanol group content falls within the above-described range, the effect of suppressing the precipitation of the thermally conductive filler is particularly high.

A single type of compound may be used as the component (C), or a mixture of two or more types of compounds may be used.

The silanol group-containing organopolysiloxane (C) is not particularly limited, and any known silanol group-containing organopolysiloxane can be used as appropriate. As such a silanol group-containing organopolysiloxane, a commercially available product can be suitably used, and for example, an alkenyl group-free dimethylsilanol-terminated polydimethylsiloxane is available from Wacker Chemie AG.

The silanol group in the component (C) has an interaction with OH groups on the surface of the thermally conductive filler, which will be described later. In addition, since the component (C) has a silicone skeleton, the compatibility with the components (A) and (B) is good. By these actions, the component (C) suppresses a phenomenon in which the thermally conductive filler precipitates in the thermally conductive silicone composition over time.

Therefore, even if the thermally conductive silicone composition is stored for a long period of time, it is possible to obtain a thermally conductive member wherein the distribution of the components in the composition is prevented from becoming nonuniform and a stable quality is maintained over a long period of time as compared with a case where the component (C) is not added.

The amount of the component (C) added is within the range of 5 parts by mass or more and 100 parts by mass or less, and preferably 10 parts by mass or more and 50 parts by mass or less, relative to 100 parts by mass of the total amount of the components (A) and (B). When the amount falls within the aforementioned range, flexibility, adhesion, and low mixing viscosity can be achieved while precipitation is suppressed. In particular, when the thermally conductive member serves as a gap filler, the thermally conductive silicone composition can be injected into a fine gap, and has an advantage of excellent crushing properties. Furthermore, the pump-out resistance of the thermally conductive member after curing is maintained, and low hardness can be maintained. The cured thermally conductive member is thus able to impart flexibility to the thermally conductive member after curing. When the pump-out resistance is indicated to be a value of less than 110% by a measurement method described below, the pump-out resistance is determined to be favorable.

When the amount of the component (C) added exceeds 3 parts by mass, the pump-out resistance is particularly favorable. When it is 5 parts by mass or more, the pump-out resistance is more favorable. When it is 50 parts by mass or more, the pump-out resistance is even more favorable.

The thermally conductive silicone composition of the present invention may optionally contain an organopolysiloxane not having a silanol group, an alkenyl group, or a hydrosilyl group (for example, non-functional dimethylsiloxane). In this case, when the proportion of the component (C) in the total amount of organopolysiloxanes that are not involved in the cross-linking reaction of the components (A) and (B) (i.e., an organopolysiloxane not having an alkenyl group or a hydrosilyl group) is 50% by mass or more, the pump-out resistance can be further enhanced.

When the amount of the component (C) added is increased, flexibility is enhanced, an effect of suppressing precipitation is increased, and crushing after curing can be easily performed.

When the amount of the component (C) is further increased, for example, to 50 parts by mass or more relative to 100 parts by mass of the total amount of the components (A) and (B), the needle penetration can be increased. For example, the needle penetration after curing under a condition of 23°C and 24 hours can be increased to 10 or more, which is more preferable.

Although the component (C) has low viscosity, the component (C) has properties in which adhesion to a substrate after curing the thermally conductive silicone composition is less likely to be reduced than in a case where a polysiloxane having no silanol group is mixed. Therefore, even when the component (C) is added in an amount of 50 parts by mass or more relative to 100 parts by mass of the total amount of the components (A) and (B), suitable adhesion can be maintained.

The component (C) can enhance thread breakage when the thermally conductive silicone composition before curing is applied to a substrate with an apparatus such as a dispenser.

### Component (D):

The addition reaction catalyst of the component (D) is a catalyst that promotes an addition-curing reaction between an alkenyl group bonded to a silicon atom in the component (A) described above and a hydrogen atom bonded to a silicon atom in the component (B) described above, and is a catalyst known to those skilled in the art. Examples of the component (D) include a platinum group metal such as platinum, rhodium, palladium, osmium, iridium, and ruthenium, and catalysts in which any of the aforementioned metals is supported by a particulate carrying material (for example, activated carbon, aluminum oxide, and silicon oxide).

Furthermore, examples of the component (D) include a platinum halide, a platinum-olefin complex, a platinum-alcohol complex, a platinum-alcoholate complex, a platinumvinylsiloxane complex, dicyclopentadiene-platinum dichloride, cyclooctadiene-platinum dichloride, and cyclopentadieneplatinum dichloride.

In addition, from an economic viewpoint, a metal compound catalyst other than platinum group metals as described above may be used as the component (D). Examples of the iron catalyst for hydrosilylation include an iron-carbonyl complex catalyst, an iron catalyst having a cyclopentadienyl group as a ligand, an iron catalyst having a terpyridine-based ligand or a combination of a terpyridine-based ligand and a bistrimethylsilylmethyl group, an iron catalyst having a bisiminopyridine ligand, an iron catalyst having a bisiminoquinoline ligand, an iron catalyst having an aryl group as a ligand, an iron catalyst having a cyclic or acyclic olefin group with an unsaturated group, and an iron catalyst having a cyclic or acyclic olefinyl group with an unsaturated group. Other examples of the catalyst for hydrosilylation include a cobalt catalyst, a vanadium catalyst, a ruthenium catalyst, an iridium catalyst, a samarium catalyst, a nickel catalyst, and a manganese catalyst.

The amount of the component (D) added is, in terms of the concentration of the catalyst metal element, in the range of preferably 0.5 ppm or more and 1,000 ppm or less, more preferably 1 ppm or more and 500 ppm or less, and still more preferably 1 ppm or more and 100 ppm or less relative to the total mass of the thermally conductive silicone composition, although an effective amount thereof according to the curing temperature and curing time desired depending on the use applications is used. If the amount is less than 0.5 ppm, the addition reaction becomes remarkably slow. If the amount exceeds 1,000 ppm, it is not economically preferable because of cost increase.

### Component (E):

The thermally conductive filler of the component (E) is a filling material component that improves the thermal conductivity of the thermally conductive silicone composition. The thermally conductive filler used in the present invention is at least one or more types selected from the group consisting of a metal, a metal oxide, a metal hydroxide, a metal nitride, and a metal carbide, and has a BET specific surface area of 30 m²/g or less and an average particle diameter of 1 to 100 µm. On the surface of thermally conductive fillers of these types, OH groups are generated due to the reaction with atmospheric water. The surface OH groups are dispersed uniformly in the thermally conductive silicone composition by interaction with the component (C), and the thermally conductive fillers hardly precipitate even when being stored for a long period of time. This is assumed to be due to the hydrogen bond formed by OH groups on the surface of the thermally conductive filler with the silanol group of the component (C), and the fact in that all the components (A), (B), and (C) have a siloxane skeleton and are highly compatible with one another.

The thermally conductive filler may be added in an amount required to increase the thermal conductivity of the thermally conductive member (for example, 2.0 W/m·K or higher), and for example, the content of the component (E) is preferably 300 parts by mass or more and 2,000 parts by mass or less, more preferably 400 parts by mass or more and 1,900 parts by mass or less, and even more preferably 500 parts by mass or more and 1,800 parts by mass or less, relative to 100 parts by mass of the total amount of the components (A)and (B) .

When the content of the component (E) falls within the above-mentioned range, the thermally conductive silicone composition as a whole has sufficient thermal conductivity, is easy to mix at the time of blending, and maintains flexibility even after curing. In addition, since the component (E) contained in such an amount does not excessively increase the specific gravity, the resulting composition is more suitable as a thermally conductive silicone composition for forming a thermally conductive member that is required to have high thermal conductivity and weight reduction. If the content of the component (E) is too small, it becomes difficult to sufficiently increase the thermal conductivity of a cured product obtained from the thermally conductive silicone composition, whereas if the content of the component (E) is too large, the resulting silicone composition becomes highly viscous, and there is a possibility that it becomes difficult to uniformly apply the thermally conductive silicone composition, resulting in problems such as an increase in the thermal resistance value of the cured product and a decrease in flexibility of the cured product.

The shape of the thermally conductive filler is not particularly limited as long as the BET specific surface area is 30 m²/g or less. For example, the shape of the thermally conductive filler may be a sphere, amorphousness, fine powder, fiber, a scale shape, or the like. In order to add the thermally conductive filler in an amount required to enhance the thermal conductivity of the thermally conductive member, the thermally conductive filler preferably has a spherical shape, and the average particle diameter may be 1 to 100 µm. Herein, the spherical shape may be not only a true spherical shape but also a rounded shape.

The thermally conductive filler having a BET specific surface area of 30 m²/g or less is likely to precipitate in a liquid containing a polymer such as the components (A) and (B) compared with a thermally conductive filler having a larger specific surface area. In the present invention, the mixed component (C) suppresses the precipitation of the thermally conductive filler.

The thermally conductive fillers preferably have a thermal conductivity of 10 W/m·K or more. If the thermal conductivity is less than 10 W/m·K, the thermal conductivity itself of the thermally conductive silicone composition may be reduced. In particular, if the thermally conductive member requires electrical insulation, it is conceivable to select a non-conductive thermally conductive filler.

The component (E) may preferably be a metal oxide, a metal hydroxide, a nitride, or a mixture thereof, and may be an amphoteric hydroxide or an amphoteric oxide in some cases. Specifically, it is preferable to use one or more types selected from the group consisting of aluminum oxide, aluminum hydroxide, magnesium oxide, magnesium hydroxide, zinc oxide, aluminum nitride, and boron nitride. Among these, the component (E) preferably contains at least one selected from aluminum hydroxide and aluminum oxide.

It should be noted that aluminum oxide is an insulating material, has relatively good compatibility with the components (A) and (B), can be industrially selected from a wide variety of particle diameters, is a readily available resource, is relatively inexpensive, and is therefore suitable as the thermally conductive inorganic filling material.

When spherical aluminum oxide is used as the component (E), α-alumina obtained by high-temperature thermal spraying or hydrothermal treatment of alumina hydrate may be used.

The average particle diameter of the component (E) is in the range of 1 µm or more and 100 µm or less, more preferably 2 µm or more and 80 µm or less, and even more preferably 2 µm or more and 70 µm or less. If the average particle diameter is too small, the fluidity of the thermally conductive silicone composition is lowered. If the average particle diameter is too large, dispensing properties are impaired, and there is a possibility that problems could occur such as the scraping of the coating apparatus due to the filler being caught by the sliding portion of the coating apparatus. In the present invention, the average particle diameter of the component (E) is defined by D50 (or median diameter) that is the 50% particle diameter in the volumebased cumulative particle size distribution measured by a laser diffraction particle size measuring device.

As the component (E), a spherical thermally conductive filler may be used, or a thermally conductive filler other than a spherical shape such as an amorphous shape, a powdery shape, a fibrous shape, or a plate shape may be used in combination. When at least two or more types of thermally conductive fillers having different shapes are used in combination, the composition can be filled with the fillers in a state that is almost the closest packed, so that thermal conductivity is advantageously further increased. When the proportion of a spherical thermally conductive filler is 30% by mass or more relative to 100% by mass of the whole component (E) in a case of using the spherical thermally conductive filler in combination with a thermally conductive filler other than spherical fillers, thermal conductivity can be further increased.

The BET specific surface area of the component (E) is 30 m²/g or less. For example, when the component (E) is a spherical filler, the BET specific surface area is preferably 1 m²/g or less, and more preferably 0.5 m²/g or less. When a thermally conductive filler that is not spherical is used in combination, the BET specific surface area of the nonspherical filler may be, for example, 5 m²/g or less, and more preferably 3 m²/g or less.

In the thermally conductive silicone composition according to the present invention, a filler other than the component (E) can be further added. Examples of the filler other than the component (E) may include fillers having nonthermal conductivity such as fumed silica, crystalline silica, precipitating silica, a hollow filler, silsesquioxane, magnesium carbonate, calcium carbonate, zinc carbonate, lamellar mica, carbon black, diatomaceous earth, glass fibers, a silicone rubber powder, and a silicone resin powder, and thermally conductive fillers having a BET specific surface area of 50 m²/g or more.

When a filler having a BET specific surface area of more than 50 m²/g is mixed, the viscosity of the thermally conductive silicone composition is increased, the adhesion of the thermally conductive silicone composition after curing to a substrate is impaired, and flexibility tends to be reduced. As a result, heat dissipation properties may be reduced. When the composition is densely filled with a bulky filler, the motion of silicone rubber molecules in the composition is hindered, and resiliency is impaired. The content of the filler having a BET specific surface area of 50 m²/g or more in the thermally conductive silicone composition according to the present invention needs to be 3 parts by mass or less relative to 100 parts by mass of the total amount of the components (A) and (B).

In the present invention, the BET specific surface area of the component (E) is a value obtained by measuring the amount of gas physically adsorbed to the surface of particles in a low-temperature state and calculating a specific surface area.

### Component (F):

An organohydrogenpolysiloxane may be used as the cross-linking agent (F). The component (F) forms a cured product by an addition reaction with an alkenyl group, and may have a hydrogen atom (hydrosilyl group) bonded to at least one or more silicon atoms in the side chains within the molecule. The cross-linking agent (F) preferably has three or more hydrosilyl groups within one molecule and has at least one hydrosilyl group in a side chain within the molecule.

The cross-linking agent of the present invention is more preferably an organohydrogenpolysiloxane having 5 or more hydrosilyl groups, and may have 10 or more and 15 or less hydrosilyl groups. The organohydrogenpolysiloxane that is the cross-linking agent, has at least two hydrosilyl groups present in its side chain. The number of hydrosilyl groups at a molecular chain terminal may be zero or more and two or less, and is preferably two in terms of cost. The molecular structure of the organohydrogenpolysiloxane may be any of linear, cyclic, branched, and three-dimensional network structures. The position of the silicon atom to which a hydrogen atom is bonded is not particularly limited, and may be at a molecular chain terminal, at a non-terminal molecular chain site (in the middle of the molecular chain), or in a side chain. Other conditions, the type of the organic group other than a hydrosilyl group, the bonding position, the degree of polymerization, the structure, and the like in the organohydrogenpolysiloxane serving as the cross-linking agent are not particularly limited. Two or more types of organohydrogenpolysiloxanes may be used.

The cross-linking agent (F) may be added in an amount necessary to form a matrix including the components (A) and (B) by cross-linking. The amount of the component (F) added may be 1 part by mass or more and 10 parts by mass or less, more preferably 1 part by mass or more and 6 parts by mass or less, and even more preferably 1 part by mass or more and 4 parts by mass or less, relative to 100 parts by mass of the total amount of the components (A) and (B), for example.

In the thermally conductive silicone composition of the present invention, as an additional optional component other than the aforementioned components (A) to (F), a conventionally known additive for use in a silicone rubber or gel can be used as long as the object of the present invention is not impaired. Examples of such additives include an organosilicon compound or an organosiloxane (also referred to as a silane coupling agent) that produces silanols by hydrolysis, a condensation catalyst, an adhesive aid, a pigment, a dye, a curing inhibitor, a heat-resistance imparting agent, a flame retardant, an antistatic agent, a conductivity imparting agent, an airtightness improving agent, a radiation shielding agent, an electromagnetic wave shielding agent, a preservative, a stabilizer, an organic solvent, a plasticizer, a fungicide, an organopolysiloxane which contains one hydrogen atom or alkenyl group bonded to a silicon atom within one molecule and which contains no other functional groups, and a non-functional organopolysiloxane containing neither a hydrogen atom nor an alkenyl group bonded to a silicon atom. As these optional components, one type thereof may be used alone, or two or more types thereof may be used in combination as appropriate.

Examples of the silane coupling agent include an organosilicon compound and an organosiloxane having an organic group and a silicon atom-bonded alkoxy group within one molecule, the organic group including an epoxy group, an alkyl group, an aryl group, a vinyl group, a styryl group, a methacryl group, an acryl group, an amino group, an isocyanurate group, a ureide group, a mercapto group, an isocyanate group, and an acid anhydride. An example of the silane coupling agent is a silane compound such as octyltrimethoxysilane, octyltriethoxysilane, decyltrimethoxysilane, decyltriethoxysilane, dodecyltrimethoxysilane, dodecyltriethoxysilane, vinyltrimethoxysilane, 3-glycidoxypropyltrimethoxysilane, p-styryltrimethoxysilane, 3-methacryloxypropyltrimethoxysilane, 3-acryloxypropyltrimethoxysilane, 3-aminopropyltrimethoxysilane, 3-aminopropyltriethoxysilane, tris-(trimethoxysilylpropyl)isocyanurate, 3-ureidopropyltrialkoxysilane, 3-mercaptopropylmethyldimethoxysilane, 3-isocyanatopropyltriethoxysilane, and 3-trimethoxysilylpropyl succinic anhydride. The silane compound may be a compound having no hydrosilyl group. One type thereof may be used alone, or two or more types thereof may be used in combination as appropriate. When the surface of the thermally conductive filler is treated with the silane coupling agent, the affinity with the silicone polymer can be improved, the viscosity of the composition can be decreased, and the filling properties of the thermally conductive filler can be improved. Therefore, when a larger amount of filler is added, thermal conductivity can be improved.

A silanol produced by hydrolysis can react with and bond with a condensable group (for example, a hydroxyl group, an alkoxy group, an acid group, or the like) present on the surface of a metal substrate or an organic resin substrate. The silanol and the condensable group undergo a reaction with and are bonded to each other by the catalytic effect of the condensation catalyst, to be described later, thereby progressing the adhesion of the thermally conductive member to various substrates.

As the amount of the silane coupling agent added relative to that of the thermally conductive filler, an effective amount according to curing temperature or curing time desired depending on the use applications is used. A general optimum amount is usually 0.5 wt% or more and 2 wt% or less relative to the amount of the thermally conductive filler. A standard of a required amount is calculated by the following expression. The silane-coupling agent may be added in an amount one to three times the standard of the required amount.

Required amount (g) of silane coupling agent = Mass (g) of thermally conductive filler × Specific surface area (m²/g) of thermally conductive filler / Minimal covering area specific to silane coupling agent (m²/g)

As necessary, a condensation catalyst may be used together with the silane coupling agent described above. As the condensation catalyst, a compound of a metal selected from magnesium, aluminum, titanium, chromium, iron, cobalt, nickel, copper, zinc, zirconium, tungsten, and bismuth can be used. Preferable examples of the condensation catalysts include metal compounds such as organic acid salts, alkoxides, and chelate compounds, of trivalent aluminum, trivalent iron, trivalent cobalt, divalent zinc, tetravalent zirconium, and trivalent bismuth. Specific examples thereof include an organic acid such as octylic acid, lauric acid, and stearic acid, an alkoxide such as a propoxide and a butoxide, and a multidentate ligand chelating compound such as catechol, crown ether, a polyvalent carboxylic acid, hydroxy acid, diketone, and keto acid. Here, a plurality of types of ligands may be bonded to one metal. In particular, a compound of zirconium, aluminum, or iron, which is likely to give stable curability even when the chemical composition and use conditions are somewhat different, is preferred. In addition, examples of the more desirable compounds include a butoxide of zirconium and a trivalent chelate compound of aluminum or iron including multidentate ligands such as a malonic acid ester, an acetoacetic acid ester, an acetylacetone, or a substituted derivative thereof. In the case of a trivalent aluminum or iron metal compound, an organic acid having 5 to 20 carbon atoms, such as octylic acid, may be preferably used. The polydentate ligand and the organic acid may be bonded to one metal, and the resulting structure may also be adopted.

Examples of the aforementioned substituted derivative include those in which a hydrogen atom contained in the compound described above is substituted with an alkyl group such as a methyl group or an ethyl group, an alkenyl group such as a vinyl group or an allyl group, an aryl group such as a phenyl group, a halogen atom such as a chlorine atom or a fluorine atom, a hydroxyl group, a fluoroalkyl group, an ester group-containing group, an ether-containing group, a ketone-containing group, an amino group-containing group, an amide group-containing group, a carboxylic acid-containing group, a nitrile group-containing group, an epoxy group-containing group, or the like. Specific examples thereof include 2,2,6,6-tetramethyl-3,5-heptanedione and hexafluoropentanedione.

As the adhesive aid, one having an alkoxy group in the molecule is preferable, and specifically, tetraethoxysilane is preferable. Other preferred examples thereof include 3-glycidoxypropyltrimethoxysilane, 3-glycidoxypropyltriethoxysilane, an oligomer of 3-glycidoxypropyltrimethoxysilane, an oligomer of 3-glycidoxypropyltriethoxysilane, and those having, as an organofunctional group, one or more groups selected from a vinyl group, a methacryl group, an acryl group, and an isocyanate group. Further examples thereof include a methacryloxysilane such as 3-methacryloxypropyltrimethoxysilane and 3-methacryloxypropyltriethoxysilane, 3-trimethoxysilylpropylsuccinic anhydride, and a furandione such as dihydro-3-(3-(triethoxysilyl)propyl)-2,5-furandione.

The organic functional group may be bonded to a silicon atom via another group such as an alkylene group. In addition to the above, those containing an organosilicon compound or an organosiloxane having an organic group such as an epoxy group, an alkyl group, or an aryl group and a silicon atom-bonded alkoxy group within one molecule are preferred. Furthermore, an organosilicon compound or an organosiloxane having at least one organic group such as an epoxy group, an alkyl group, or an aryl group and at least two silicon atom-bonded alkoxy groups within one molecule are preferred. Such epoxy groups can be bonded to a silicone atom in the form of a glycidoxyalkyl group such as a glycidoxypropyl group, or an epoxy-containing cyclohexylalkyl group such as a 2,3-epoxycyclohexylethyl group or a 3,4-epoxycyclohexylethyl group. Alternatively, an organic group having a linear or branched alkyl group having 1 to 20 carbon atoms or an aromatic ring is preferred. If the epoxy group is contained, two to three epoxy groups may be contained within one molecule. Preferred examples of the silicon atom-bonded alkoxy group include a methoxy group, an ethoxy group, a propoxy group, and an alkyldialkoxysilyl group such as a methyldimethoxysilyl group, an ethyldimethoxysilyl group, a methyldiethoxysilyl group, and an ethyldiethoxysilyl group.

As functional groups other than those described above, for example, a functional group selected from an alkenyl group such as a vinyl group, a (meth)acryloxy group, a hydrosilyl group (an SiH group), and an isocyanate group may be used.

Examples of the pigment include titanium oxide, alumina silicic acid, iron oxide, zinc oxide, calcium carbonate, carbon black, a rare earth oxide, chromium oxide, a cobalt pigment, ultramarine blue, cerium silanolate, aluminum oxide, aluminum hydroxide, titanium yellow, barium sulfate, precipitated barium sulfate, and mixtures thereof.

The amount of the pigment added is preferably in the range of 0.001% to 5% relative to the total mass of the thermally conductive silicone composition although an effective amount thereof according to the curing temperature and curing time desired depending on the use applications is used. The amount of the pigment is preferably in the range of 0.01% or more and 2% or less, and more preferably 0.05% or more and 1% or less. If the amount is less than 0.001%, the resulting composition is insufficiently colored, so it is difficult to visually distinguish the first liquid from the second liquid. On the other hand, if the amount exceeds 5%, the cost will increase, which is not economically preferable.

The curing inhibitor has an ability of adjusting the curing rate of the addition reaction, and any curing inhibitor conventionally known in the art can be used as the compound having a curing suppressing effect. Examples thereof include an acetylene-based compound, hydrazines, triazoles, phosphines, and mercaptans. Specific examples of such compounds include a phosphorus-containing compound such as triphenylphosphine, a nitrogen-containing compound such as tributylamine, tetramethylethylenediamine, and benzotriazole, a sulfur-containing compound, an acetylene-based compound, a compound containing two or more alkenyl groups, a hydroperoxy compound, a maleic acid derivative, and silane and a silicone compound having an amino group.

The amount of the curing inhibitor added is preferably in the range of 0.1 parts by mass to 15 parts by mass relative to 100 parts by mass of the total amount of the components (A) and (B), although an effective amount thereof depending on the curing temperature and curing time desired depending on the use applications is used. The amount is preferably in the range of 0.2 parts by mass to 10 parts by mass, and more preferably in the range of 0.5 parts by mass to 5 parts by mass. If the amount is less than 0.1 parts by mass, the addition reaction becomes remarkably accelerated, and the curing reaction proceeds during coating, which may deteriorate the workability. On the other hand, if the amount exceeds 10 parts by mass, the addition reaction becomes slow, so a pump-out phenomenon may occur.

Specific examples of the curing inhibitors include various "ene-yne" systems such as 3-methyl-3-pentene-1-yne and 3,5-dimethyl-3-hexene-1-yne; an acetylenic alcohol such as 3,5-dimethyl-1-hexin-3-ol, 1-ethynyl-1-cyclohexanol, and 2-phenyl-3-butyn-2-ol; well-known maleates and fumarates such as a dialkyl maleate, a dialkenyl maleate, a dialkoxyalkyl maleate, a dialkyl fumarate, a dialkenyl fumarate, and a dialkoxyalkyl fumarate; and those containing cyclovinylsiloxane.

Examples of the heat-resistance imparting agent include cerium hydroxide, cerium oxide, iron oxide, fumed titanium dioxide, and mixtures thereof.

As the airtightness improving agent, any agent may be used as long as it has an effect of reducing the air permeability of the cured product, and any organic or inorganic substance may be used. Specific examples thereof include a urethane, a polyvinyl alcohol, a polyisobutylene, an isobutylene-isoprene copolymer, talc having a plate-like shape, mica, glass flakes, boehmite, powders of various metal foils and metal oxides, and mixtures thereof.

The thermally conductive silicone composition according to the present invention may not contain an organosilicon compound having one or more alkenyl groups and one or more alkoxy groups bonded to silicon atoms within one molecule. When a compound having an alkenyl group and an alkoxy group bonded to a silicon atom within one molecule is contained in the composition, when the thermally conductive member is used as a gap filler, the compound acts as a component for bonding the substrate to the gap filler. The composition according to the present invention that does not contain such a component can further reduce deformation, damage, or the like of batteries etc., when a thermally conductive member is exposed to high temperatures to be peeled off from a substrate.

The thermally conductive silicone composition of the present invention may contain any one or two or more selected from the group consisting of octamethylcyclotetrasiloxane (D4), decamethylcyclopentasiloxane (D5), dodecamethylcyclohexasiloxane (D6), tetradecamethylcycloheptasiloxane (D7), and hexadecamethylcyclooctasiloxane (D8).

The total content of (D4), (D5), (D6), (D7), and (D8) may be less than 0.1 parts by mass (i.e., less than 1,000 ppm) relative to 100 parts by mass of the total amount of the components (A) and (B).

When the total content of (D4) to (D8) contained in the thermally conductive silicone composition falls within the aforementioned range, the flashing point of the whole composition may be increased, and safety during storage may be improved. Furthermore, the thermally conductive member obtained by curing the composition can be provided in a manner wherein the member is unlikely to cause a contact failure with an electronic part and the like.

A thermally conductive silicone composition containing (D4) to (D8) in an amount of less than 0.1 parts by mass as the total content of (D4) to (D8) relative to 100 parts by mass of the total amount of the components (A) and (B) can be produced by using the component (A) in which the total content of (D4) to (D8) is less than 0.1 parts by mass, the component (B) in which the total content of (D4) to (D8) is less than 0.1 parts by mass, and the component (C) in which the total content of (D4) to (D8) is less than 0.1 parts by mass.

The respective contents of (D4) to (D8) are measured by gas chromatography. A measurement condition of gas chromatography may be appropriately selected in accordance with a conventionally known method.

Use of the components (A), (B), and (C) in which the total content of (D4) to (D8) are small can make the total content of (D4) to (D8) in the thermally conductive silicone composition fall within the aforementioned range. As a method for reducing the contents of (D4) to (D8) in the components (A) to (C), a method of subjecting a component to a heating treatment under reduced pressure is widely known. For example, it is preferable that a heating treatment under reduced pressure be performed at 180°C and 20 mmHg for about 8 hours during production of raw materials for the components (A) to (C).

The thermally conductive silicone composition according to the present invention is an addition-curable composition and may be a one-component composition or a two-component composition. The one-component composition can have an improved storage property when the composition is appropriately designed to be cured by heat.

In the case of a two-component composition, it becomes possible to further improve storage stability without these contrivances, and it is easy to obtain a composition that cures at room temperature (e.g., 25°C). In that case, the thermally conductive silicone composition according to the present invention can be dispensed into the first liquid and the second liquid, for example as follows. The first liquid does not contain the component (B) and contains the component (D), and the second liquid contains the components (B) and (F) and does not contain the component (D).

Therefore, the method for producing the two-component thermally conductive silicone composition according to the present invention includes:
a first step of mixing the component (A) that is an alkenyl group-containing organopolysiloxane, the component (C) that is a silanol group-containing organopolysiloxane having a viscosity, at 25°C, of 10 mPa·s to 500 mPa·s, and wherein a content of the component (C) is 5 parts by mass or more and 100 parts by mass or less relative to 100 parts by mass of the total amount of the components (A) and (B), and the content of the silanol groups in the component (C) is 1% by mass to 8% by mass relative to 100% by mass of the total content of the component (C), the component (E) that is a thermally conductive filler, and the component (D) that is an addition reaction catalyst to obtain a first liquid; and
a second step of mixing the component (A) that is an alkenyl group-containing organopolysiloxane, the component (B) that is an organopolysiloxane having two or more hydrosilyl groups within one molecule, the component (C) that is a silanol group-containing organopolysiloxane having a viscosity, at 25°C, of 10 mPa·s or more and 500 mPa·s or less, the component (E) that is a thermally conductive filler, and the component (F) that is a cross-linking agent to obtain a second liquid.

The above-mentioned thermally conductive silicone composition has high storage stability because precipitation of the thermally conductive filler is suppressed.

For example, when the above-mentioned thermally conductive silicone composition is stored at room temperature for 1,000 hours, the difference in specific gravity between the upper portion and the lower portion of the thermally conductive silicone composition is within 0.2.

The present invention also provides a method for producing a thermally conductive member, comprising a mixing step of mixing the first liquid and the second liquid of the two-component thermally conductive silicone composition described above, an application step of applying the resulting mixture of the first liquid and the second liquid obtained in the mixing step to a substrate, and a curing step of curing the uncured mixture applied in the application step.

The thermally conductive silicone composition applied to the substrate in the application step forms a thermally conductive member that is a non-flowable cured product within about 120 minutes after application. The temperature for curing after application to the substrate is not particularly limited, and may be, for example, a temperature of 15°C or higher and 60°C or lower. In order to reduce thermal damage to the substrate and the like, the temperature may be 15°C or higher and 40°C or lower. In particular, when the substrate is a polycarbonate or a PET having poor heat resistance, it is preferable not to heat the substrate. When the thermally conductive silicone composition is a heat-curable composition, the composition may be applied to a substrate or the like and then heated, or may be cured by utilizing heat derived from a heat dissipation member. The temperature in the case of heat curing may be, for example, 40°C or higher and 150°C or lower when the thermally conductive filler is aluminum hydroxide, or 40°C or higher and 180°C or lower when the thermally conductive filler is aluminum oxide.

When the thermally conductive member is used as a gap filler, the substrate to which the gap filler is applied is not particularly limited, and examples thereof include resins such as a polyethylene terephthalate (PET), a poly(1,4-butylene terephthalate) (PBT), and a polycarbonate, ceramics, glasses, and metals such as aluminum.

The thermally conductive member produced by the aforementioned method has high flexibility and high heat dissipation properties.

Since the flexibility of the thermally conductive member according to the present invention corresponds to the needle penetration falling within the range of 10 or more and 50 or less defined by JIS K 6249 and the thermally conductive member can fill fine gaps, the thermally conductive member has high adhesion and heat dissipation properties. Furthermore, breakage and deformation of a heat dissipation member can be suppressed even if an impact from the outside is applied to the thermally conductive member.

The thermal conductivity of the thermally conductive member according to the present invention is not particularly limited, and for example, is 2.0 W/m·K or more.

The present invention also provides a method for reducing the hardness of a cured product obtained by curing a thermally conductive silicone composition, the method including adding a component (C) that is a silanol group-containing organopolysiloxane having a viscosity, at 25°C, of 10 mPa·s or more and 500 mPa·s or less to the thermally conductive silicone composition, and wherein a content of the component (C) is 5 parts by mass or more and 100 parts by mass or less relative to 100 parts by mass of the total amount of the components (A) and (B), and the content of the silanol groups in the component (C) is 1% by mass to 8% by mass relative to 100% by mass of the total content of the component (C), the thermally conductive silicone composition including a component (A) that is an alkenyl group-containing organopolysiloxane, a component (B) that is an organopolysiloxane having two or more hydrosilyl groups within one molecule, a component (D) that is an addition reaction catalyst, a component (E) that is at least one or more types of thermally conductive filler selected from the group consisting of a metal, a metal oxide, a metal hydroxide, a metal nitride, and a metal carbide, the thermally conductive filler having a BET specific surface area of 30 m²/g or less and an average particle diameter of 1 to 100 µm, and a component (F) that is a cross-linking agent.

The thermally conductive silicone composition according to the present invention may have the following chemical composition relative to 100 parts by mass of the total amount of the components (A) and (B) except for the component (D):
2 parts by mass or more and less than 90 parts by mass of the component (A) that is an alkenyl group-containing organopolysiloxane;
10 parts by mass or more and less than 98 parts by mass of the component (B) that is an organopolysiloxane having two or more hydrosilyl groups within one molecule;
3 parts by mass or more and 100 parts by mass or less of the component (C) that is a silanol group-containing organopolysiloxane having a viscosity, at 25°C, of 10 mPa·s or more and 500 mPa·s or less;
the component (D) that is an addition reaction catalyst;
500 parts by mass or more and 2,000 parts by mass or less of the component (E) that is a thermally conductive filler being at least one or more types of thermally conductive filler selected from the group consisting of a metal, a metal oxide, a metal hydroxide, a metal nitride, and a metal carbide, the thermally conductive filler having a BET specific surface area of 30 m²/g or less and an average particle diameter of 1 to 100 µm; and
1 part by mass or more and 10 parts by mass or less of the component (F) that is a cross-linking agent,
wherein the component (D) is contained in an amount of 0.5 ppm or more and 1,000 ppm or less relative to the total mass of the thermally conductive silicone composition.

### [Examples]

The present invention will be specifically described on the basis of Examples, but the present invention is not limited to the following Examples. Tables 1 and 2 show mixing ratios of components in Examples and Comparative Examples, and evaluation results. Numerical values of the mixing ratios shown in Tables 1 and 2 are expressed in part by mass.

The viscosity described in the specification may be measured by a rotational viscometer (JIS K7117-2) at 25°C and a shear rate of 10/s.

Method for producing cured product (thermally conductive member) of thermally conductive silicone composition:
A first liquid and a second liquid described in each of Examples and Comparative Examples were weighed at a ratio of 1:1, sufficiently mixed by a stirrer, and then degassed by a vacuum pump, to produce each thermally conductive silicone composition. The thermally conductive silicone compositions were each cured at 23°C for 24 hours so as to obtain the thermally conductive members, each member being a cured product and a test piece for the various evaluations.

Method for measuring needle penetration:
A first liquid and a second liquid described in each of Examples and Comparative Examples were weighed at a ratio of **1:1,** sufficiently mixed by a stirrer, and then degassed with a vacuum pump. The resultant was placed in a transparent cylindrical container, and then cured at 23°C for 24 hours, to obtain a cylindrical cured product.

Needle penetration was measured with a needle penetration tester in an environment of 23°C in accordance with a method of JIS K 6253 of The Society of Rubber Industry Japan standard. Specifically, the needle penetration tester was pressed on a surface of the obtained cylindrical cured product from directly above, and penetration was performed for 5 seconds. Subsequently, the reading on the indicator was recorded as an integer. The measurement with the needle penetration tester was performed three times, and an average of the measured results was used. In general, as the needle penetration becomes smaller, flexibility becomes lower. It is preferable that the needle penetration of the cured product of the thermally conductive silicone composition of the present invention be within the range of 10 or more and 50 or less. When the needle penetration exceeds 50, the strength of the cured product is insufficient. When the needle penetration is less than 10, it is assumed that the flexibility of the cured product is impaired, and the followability is insufficient when vibration occurs after the thermally conductive silicone composition is put into and cured in a gap between a heat generating body and a heat dissipation body.

Method for measuring specific gravity of upper portion and specific gravity of lower portion, and evaluation of precipitation suppression:
In order to confirm the storage stability of the thermally conductive silicone composition, precipitation suppression was evaluated. When the evaluation result of precipitation suppression is favorable, the storage stability is determined to be favorable.

The first liquid and the second liquid described in each of Examples and Comparative Examples were each added at an amount of about 0.7 L to each container in which an inner package was put in a 1-L metal cylindrical can. A polyethylene film with a thickness of 0.05 mm was placed on an upper portion thereof, and the container was closed with a lip of the metal can, and was left to stand at normal temperature (23°C) for 1,000 hours.

After being left standing for 1,000 hours, the content was taken out from the top so as to prevent upper and lower portions from being mixed, and divided into three. The upper one-third of the content is referred to as an upper portion, and the lower one-third of the content is referred to as a lower portion. The first liquid and the second liquid of the upper portion were each weighed at a ratio of 1:1, sufficiently mixed by a stirrer, and then degassed with a vacuum pump, and the same was performed for the lower portion. The resultant was poured into a sheet-shaped press mold having a length of about 10 cm, a width of about 10 cm, and a thickness of 2 mm, and cured at 23°C for 24 hours, to obtain a cured product. The specific gravity (density) (g/cm³) of the cured product obtained in each of Examples and Comparative Examples was measured in accordance with JIS K 6249.

In evaluation of precipitation suppression, a difference in specific gravity between the upper portion and the lower portion of less than 0.10 is determined as A, a difference in specific gravity of 0.10 or more and less than 0.20 as B, a difference in specific gravity of 0.20 or more and less than 0.30 as C, and a difference in specific gravity of 0.30 or more as D.

The evaluation result is preferably B or better.

Method for measuring thermal conductivity:
A first liquid and a second liquid described in each of Examples and Comparative Examples were weighed at a ratio of 1:1, sufficiently mixed by a stirrer, and then degassed by a vacuum pump. The resultant thermally conductive silicone composition was poured into a columnar press mold having a diameter of 30 mm and a height of 6 mm, and then cured at 23°C for 24 hours, to obtain each columnar cured product. The thermal conductivity of the cured product was measured by a measurement device (TPS-500 manufactured by Kyoto Electronics Manufacturing Co., Ltd.) on the basis of a hot disc method in accordance with ISO 22007-2. A sensor was disposed between two columnar cured products that were produced as described above, and the thermal conductivity was measured by the measurement device.

The thermal conductivity is preferably 2.0 W/m·K or more.

Method for measuring adhesion:
A first liquid and a second liquid described in each of Examples and Comparative Examples were discharged in an amount of 0.25 cc on a PET substrate with MPP-3 manufactured by Musashi Engineering, Inc. Then, the substrate was flipped and vibrated at 5 Hz for 30 seconds, and evaluation was performed.

The evaluation results were determined as follows. The determined result is preferably B or better.
A: When the substrate is flipped and vibrated, the liquid does not fall.
B: When the substrate is flipped, the liquid does not fall, but when the substrate is vibrated, the liquid falls.
C: When the substrate is flipped, the liquid falls.

Method for measuring pump-out resistance:
A first liquid and a second liquid described in each of Examples and Comparative Examples were weighed at a ratio of 1:1, and sufficiently mixed by a stirrer. The mixture was applied to an aluminum substrate of 70 mm × 70 mm. A spacer with a thickness of 2 mm was placed at both ends of the aluminum substrate, and a PET substrate of 70 mm × 70 mm was placed on the aluminum substrate and pressed from above. An outline of the mixture pressed at that time was traced with a pen, and an initial area was obtained.

The aforementioned specimen was left at 40°C for 20 minutes, and vibrated 3,000 times at 10 Hz and a displacement of 0.15 mm. The area of the outline after vibration was obtained as an area after a test. The pump-out ratio of the area after a test to the initial area was evaluated as follows.
A: 100% or more and less than 105%
B: 105% or more and less than 110%
C: 110% or more and less than 115%
D: 115% or more

Method for testing heat resistance:
A first liquid and a second liquid described in each of Examples and Comparative Examples were weighed at a ratio of 1:1, sufficiently mixed by a stirrer, and then degassed with a vacuum pump. The resultant was poured into a columnar press mold having a diameter of 30 mm and a height of 6 mm, and then cured at 23°C for 24 hours, to obtain a columnar cured product. The respective cured products were cooled at normal temperature for 60 minutes, left at 200°C for 24 hours, so as to be subjected to an endurance test. In the specification, a condition under which a test piece is left at a temperature of 200°C for 24 hours is also referred to as a high-temperature exposure or high-temperature endurance test.

The cured products after the endurance test were left at room temperature for 1 hour. Measurement was performed with a measurement device (TPS-500 manufactured by Kyoto Electronics Manufacturing Co., Ltd.) on the basis of a hot disc method in accordance with ISO 22007-2. A sensor was disposed between two columnar cured products that were produced as described above, and the thermal conductivity was measured by the measurement device.

When the thermal conductivity after the endurance test is 2.0 W/m·K or more, a cured product is evaluated to have desired heat resistance.

Method for evaluating thread breakage:
A dispenser (MPP3 manufactured by Musashi Engineering, Inc.) was charged with the thermally conductive silicone composition, and the thermally conductive silicone composition was applied in a bead having a width of 10 mm and a length of 20 mm with the dispenser from a height of 2.5 mm above an aluminum plate. The thermally conductive silicone composition was discharged at five positions at intervals of 10 mm, and four bead lengths were measured. When the average of the bead lengths is closer to 10 mm, the thread breakage is judged to be favorable. When the average is closer to 0 mm, the thread breakage is judged to be poor.

Evaluation results are expressed in the following three stages including A (good), B (average), and C (poor).
A: 6 mm or more
B: 2 mm or more and less than 6 mm
C: less than 2 mm

Method for evaluating amount of low molecular-weight cyclic siloxane:
A first liquid and a second liquid described in each of Examples and Comparative Examples were weighed at a ratio of 1:1, sufficiently mixed by a stirrer, and then degassed with a vacuum pump. The resultant was poured into a plate-shaped press mold having a width of 100 mm, a length of 100 mm, and a height of 6 mm and then cured at 23°C for 24 hours, to obtain a cured product. The cured product weighed in an amount of 0.3 g was placed in 10 mL of acetone solution in a sample vial. The vial was closed, and extraction was performed over 12 hours. Using this extracted solution, low molecular-weight cyclic compounds ((D4) to (D8)) were weighed by gas chromatography.

Method for producing cured product of thermally conductive silicone composition:
(Example 1) A first liquid and a second liquid were each produced in accordance with the chemical compositions shown in fields of Example 1 in Table by the following procedures. The unit of mixing ratio of each component shown in Table is part by mass.

### [First liquid of Examples 1 to 3]

A diorganopolysiloxane having an alkenyl group as the component (A), a polydimethylsiloxane containing a silanol group as the component (C), a platinumdivinyltetramethyldisiloxane complex as the component (D), and respective half amounts of a silane coupling agent "SILANE 25013VP" manufactured by Wacker Chemie AG as an optional component were each weighed, added together, and kneaded at room temperature for 30 minutes with a planetary mixer.

The component (A) is a linear dimethylpolysiloxane having an alkenyl group only at both terminals, with a viscosity of 150 mPa·s.

The component (C) is a linear dimethylpolysiloxane having one silanol group at each of both terminals, with a viscosity of 50 mPa·s.

After that, respective half amounts of spherical alumina having an average particle diameter of 45 µm (component (E-1)) and amorphous alumina having an average particle diameter of 3 µm (component (E-2)), which are thermally conductive fillers serving as the component (E), were added, and the mixture was kneaded at room temperature for 15 minutes with a planetary mixer.

After that, a half amount of the silane coupling agent, respective half amounts of the spherical thermally conductive filler and the amorphous thermally conductive filler as the component (E) were added, and kneaded at room temperature for 15 minutes with a planetary mixer to prepare a first liquid.

Spherical alumina DAM-45 (average particle diameter: 45 µm, BET specific surface area: 0.15 m²/g) manufactured by Denka Co., Ltd. was used as the spherical alumina (E-1).

Fine-grain alumina SA34 (average particle diameter: 3 µm, BET specific surface area: 1.9 m²/g) manufactured by Nippon Light Metal Co., Ltd. was used as the amorphous alumina (E-2).

### [Second liquid of Examples 1 to 3]

A diorganopolysiloxane, having the same alkenyl group as that for the first liquid, as the component (A), a linear diorganopolysiloxane having a viscosity of 70 mPa·s with two hydrogen atoms at both terminals as the component (B), a cross-linking agent as the component (F), and a silane coupling agent "SILANE 25013VP" manufactured by Wacker Chemie AG as an optional component were each weighed, added together, and kneaded at room temperature for 30 minutes with a planetary mixer.

The cross-linking agent as the component (F) is a dimethylpolysiloxane having twelve hydrogen atoms bonded to the silicon atoms in the side chains, with a hydrogen content of 0.17% by weight and a viscosity of 70 mPa·s. After that, a half amount of the silane coupling agent, and the same spherical thermally conductive filler (E-1) and amorphous thermally conductive filler (E-2) as those for the first liquid as the component (E) were added and kneaded for 15 minutes at room temperature with a planetary mixer, to produce a first liquid.

### (Example 4)

A first liquid and a second liquid were prepared in the same manner as that in Example 2 except that aluminum hydroxide SBX73 manufactured by Nippon Light Metal Co., Ltd. (E-3) was used instead of the amorphous alumina.

As the aluminum hydroxide (E-3), amorphous aluminum hydroxide SBX73 manufactured by Nippon Light Metal Co., Ltd. (average particle diameter: 10 µm, BET specific surface area: 1.5 m²/g)) was used.

### (Example 5)

A first liquid and a second liquid were prepared in the same manner as that in Example 2 except that a linear dimethylpolysiloxane that had no silanol groups at both terminals and in the side chain, that had a viscosity of 50 mPa·s, and that had one trimethoxysilyl group at each of both terminals was used as the component (C).

### (Example 6)

A first liquid and a second liquid were prepared in the same manner as that in Example 2 except that after the amorphous alumina as the component (E) was kneaded, an amorphous silica AEROSIL200 manufactured by EVONIK Japan Co., Ltd. (E-4) was added thereto and kneaded for 15 minutes.

Silica AEROSIL200 (average particle diameter: 20 nm, BET specific surface area: 200 m²/g) manufactured by EVONIK Japan Co., Ltd. was used as the silica (E-4).

### (Example 7)

A first liquid and a second liquid were prepared in the same manner as that in Example 2 except that a linear dimethylpolysiloxane that had one alkenyl group only at each of both terminals and a viscosity of 1,000 mPa·s was used as the component (A).

### (Example 8)

A first liquid and a second liquid were prepared in the same manner as that in Example 2 except that a polymethylphenylsiloxane having one silanol group at each of both terminals with a viscosity of 150 mPa·s was used as the component (C) .

### (Comparative Example 1)

A first liquid and a second liquid were prepared in the same manner as that in Example 1 except that the component (C) was not added thereto.

### (Comparative Example 2)

A first liquid and a second liquid were prepared in the same manner as that in Example 1 except that the content of the component (C) was reduced to 1 part by mass.

### (Comparative Example 3)

A first liquid and a second liquid were prepared in the same manner as that in Example 1 except that the content of the component (C) was increased to 150 parts by mass.

### (Comparative Example 4)

A first liquid and a second liquid were prepared in the same manner as that in Example 1 except that 100 parts by mass of a linear dimethylpolysiloxane that had no silanol groups at both terminals and in the side chain, that had a viscosity of 50 mPa·s, and that had trimethoxy groups at both terminals, which was the same compound as that used in Example 5 as the component (C), was added.

### (Comparative Example 5)

A first liquid and a second liquid were prepared in the same manner as that in Example 2 except that 50 parts by mass of a dimethylpolysiloxane having a silanol group at both terminals with 700 mPa·s was added as the component (C).

### (Comparative Example 6)

A first liquid and a second liquid were prepared in the same manner as that in Example 2 except that after the spherical alumina (E-1) and the amorphous alumina (E-2) as the component (E) were kneaded, 5 parts by mass of AEROSIL200 manufactured by EVONIK Japan Co., Ltd. (E-4) was added thereto and kneaded for 15 minutes.

### (Comparative Example 7)

A first liquid and a second liquid were prepared in the same manner as that in Comparative Example 1 except that after the spherical alumina (E-1) and the amorphous alumina (E-2) as the component (E) were kneaded, starch manufactured by FUJIFILM Wako Chemical Corporation was added as a component (G) and kneaded for 15 minutes.

### (Comparative Example 8)

A first liquid and a second liquid were prepared in the same manner as that in Example 2 except that an organopolysiloxane that had one silanol group at each of both terminals and an alkenyl group in the side chain (viscosity: 150 mPa·s) was used as the component (A) and the component (C) was not added.

### (Comparative Example 9)

A first liquid and a second liquid were prepared in the same manner as that in Example 2 except that only an organopolysiloxane having no silanol group, which was the same as that used in Example 5, was used as the component (C) and the same silica as that used in Example 6 was added thereto as the component (E).

### (Comparative Example 10)

A first liquid and a second liquid were prepared in the same manner as that in Example 1 except that the component (C) was not added and the added amounts of the spherical alumina (E-1) and amorphous alumina (E-2) of the component (E) were 250 and 200 parts by mass, respectively.

The evaluation results are as shown in Tables 1 and 2.

In Examples 1 to 3, 5 to 100 parts by mass of the organopolysiloxane having a silanol group as the component (C) was mixed, but the needle penetration fell within the range of 10 to 50, and the result of pump-out resistance was favorable. Therefore, the cured products were confirmed to have sufficient flexibility after curing and favorable pump-out resistance. The thermal conductivities were 2.0 W/m·K or more, and the thermally conductive properties were favorable. The differences in specific gravity between upper and lower portions after being left for 1,000 hours were less than 1, and thus the precipitation suppression was also favorable. For thread breakage, 6 mm or more was attained, and the thread breakage was favorable. The amounts of the low molecular-weight cyclic compounds were 500 ppm or less, giving favorable results.

In the chemical composition of Example 4, amorphous alumina was replaced with aluminum hydroxide. The thermal conductivity was lower than those in Examples 1 to 3, but precipitation suppression was improved more than that in Example 2 in which the chemical composition except for the inclusion of aluminum hydroxide was the same as in Example 4. Due to the addition of aluminum hydroxide, the thermal conductivity is reduced after the high-temperature endurance test. This reduction is due to dehydration and decomposition occurring during exposure of aluminum hydroxide to high temperature. Therefore, the heat resistance was lower than that in Example 2 although it was within an acceptable range. The needle penetration was within the range of 10 to 50, which indicated favorable flexibility.

In the chemical composition of Example 5, an dimethylpolysiloxane having no silanol group was added as the component (C). The flexibility and the storage stability were favorable, but the pump-out resistance and thread breakage were lower than those in Example 3 in which the total amount of the component (C) was the same as in Example 5. When the organopolysiloxane having no silanol group is mixed, the amount of the organopolysiloxane having no silanol group mixed is made equal to or less than the amount of the organopolysiloxane having a silanol group. Thus, it is confirmed that a thermally conductive silicone composition having a pump-out resistance of B or better and thread breakage of B or better is obtained.

In the chemical composition of Example 6, an organopolysiloxane having silanol group as the component (C) and silica as the component (E) were added. The precipitation suppression was the same as that in Example 2 in which the total amount of the component (C) was the same as in Example 6. Due to the addition of silica, the needle penetration is reduced. The adhesion is lower than that in Example 2.

In the chemical composition of Example 7, a diorganopolysiloxane having an alkenyl group at both terminals with a viscosity of 1,000 mPa·s was used as the component (A). As compared with Example 2 in which the chemical composition except the component (A) was the same as in Example 7, the precipitation suppression was increased, but the flexibility was slightly decreased and the needle penetration was decreased.

In the chemical composition in Example 8, a dimethylphenylpolysiloxane having a silanol group at both terminals with a viscosity of 150 mPa·s was used as the component (C). The needle penetration is lower than that in Example 2 in which the total amount of the component (C) is the same as in Example 8.

In the chemical composition of Comparative Example 1, the component (C) was not added. Therefore, the flexibility and the effect of suppressing precipitation are reduced, and the needle penetration, the result of pump-out resistance, and the thread breakage are reduced.

In the chemical composition of Comparative Example 2, the amount of the component (C) was reduced to 1 part by mass. Since the amount of the component (C) is reduced, the precipitation suppression, the pump-out resistance, and the thread breakage deteriorate.

In the chemical composition of Comparative Example 4, only an dimethylpolysiloxane having no silanol group was used as the component (C). The flexibility is high, and the needle penetration is increased to 40. However, the pump-out resistance, the effect of suppressing precipitation, and the thread breakage are largely lower than those in Example 3 in which the total amount of the component (C) is the same as in Comparative Example 4. This shows that the three properties described above cannot be maintained when only the organopolysiloxane having no silanol group is used.

In the chemical composition in Comparative Example 5, a diorganopolysiloxane having a silanol group at both terminals and having a viscosity of 700 mPa·s was used as the component (C). The precipitation suppression and the pump-out resistance are lower than those in Example 2 in which the total amount of the component (C) is the same as in Comparative Example 5. It is considered that due to use of the diorganopolysiloxane having a silanol group at both terminals and an elongated molecular chain, the density of hydrogen bond is low and effects of precipitation suppression and pump-out resistance are reduced.

In the chemical composition of Comparative Example 6, the component (C) was added and 5 parts by mass of silica as the component (E) was added. Due to the silica, the precipitation suppression is favorable. However, the amount of silica mixed is large, the adhesion deteriorates, and the needle penetration is reduced.

In the chemical composition of Comparative Example 7, starch was added as the component (G). The needle penetration, the precipitation suppression, the adhesion, the pump-out resistance, and the thread breakage are within the acceptable ranges, and the results are favorable. The thermal conductivity before exposure to high temperature is 2.0 W/m·K or more, which is favorable. Due to the decomposition of starch, the thermal conductivity after exposure to high temperature is reduced to less than 2.0 W/m·K.

In the chemical composition of Comparative Example 8, an organopolysiloxane having a silanol group at both terminals and an alkenyl group in a side chain was used as the component (A), and the component (C) was not added. The precipitation suppression, the thermal conductivity, the adhesion, the pump-out resistance, and the thread breakage are within the acceptable ranges, and the results are favorable. Due to the absence of the component (C), the needle penetration is reduced.

In the chemical composition of Comparative Example 9, only an organopolysiloxane having no silanol group was used as the component (C), and silica was added as the component (E). The precipitation suppression, the thermal conductivity, the pump-out resistance, and the thread breakage are within the acceptable ranges, but due to the addition of silica, the needle penetration and the adhesion deteriorate.

In the chemical composition of Comparative Example 10, the amount of thermally conductive filler as the component (E) was reduced compared to the example 1. Since the amount of the thermally conductive filler is reduced, the precipitation suppression falls within the acceptable range. However, the thermal conductivity is 2.0 W/m·K or less, and the thread breakage is rated C.

In all Examples 1 to 9, the total content of the low molecular weight cyclic siloxanes (D4) to (D8) was 500 ppm or less. In all the cases, the flashing point of the thermally conductive silicone composition was 100°C or higher. Since the content of the low molecular-weight cyclic siloxane is small, the amount of low molecular-weight cyclic siloxane volatilized is small during overheating (for example, during heating to 100°C or higher for 1 minute or longer), and a contact failure in an electronic part and the like is thus unlikely to occur.

**[Table 1]**

| | | | | Example | | | | | | | |
|---|---|---|---|---|---|---|---|---|---|---|---|
| | | | | 1 | 2 | 3 | 4 | 5 | 6 | 7 | 8 |
| First liquid | A-1 | Organopolysiloxane having alkenyl group at both terminals | Viscosity at 25°C: 150mPa-s | 100 | 100 | 100 | 100 | 100 | 100 | | 100 |
| | A-2 | Organopolysiloxane having alkenyl group at both terminals | Viscosity at 25°C: 1000mPa-s | | | | | | | 100 | |
| | A-3 | Organopolysiloxane having OH group at both terminals and alkenyl group in side chain | Viscosity at 25°C: 150mPa-s | | | | | | | | |
| | C | Silanol group-containing polydimethylsiloxane | Viscosity at 25°C: 50mPa.s | 5 | 50 | 100 | 50 | 50 | 50 | 50 | |
| | | Polydimethylsiloxane having no silanol group | Viscosity at 25°C: 50mPa.s | | | | | 50 | | | |
| | | Silanol group-containing polymethylphenylsiloxane | Viscosity at 25°C: 150mPa-s | | | | | | | | 50 |
| | | Silanol group-containing polydimethylsiloxane | Viscosity at 25°C: 700mPa-s | | | | | | | | |
| | D | Addition reaction catalyst | Platinum catalyst | 5 | 5 | 5 | 5 | 5 | 5 | 5 | 5 |
| | E-1 | Spherical alumina (particle diameter: 45 mm, BET: 0.15 m²/g) | DAW-45 | 500 | 500 | 500 | 500 | 500 | 500 | 500 | 500 |
| | E-2 | Amorphous alumina (particle diameter: 3 mm, BET: 1.9 m²/g) | SA34 | 300 | 300 | 300 | | 300 | 300 | 300 | 300 |
| | E-3 | Aluminum hydroxide (particle diameter: 10 mm, BET: 1.5 m²/g) | SBX73 | | | | 300 | | | | |
| | E-4 | Silica (particle diameter: 50 nm. BET: 200 m²/g) | AEROSI L 200 | | | | | | 3 | | |
| | G | Polysaccharide | Starch | | | | | | | | |
| | | Silane coupling agent | SILANE 25013 VP | 5 | 5 | 5 | 5 | 5 | 5 | 5 | 5 |
| | | | | | | | | | | | |
| Second liquid | A-1 | Organopolysiloxane having alkenyl group at both terminals | Viscosity at 25°C: 150mPa.s | 75 | 75 | 75 | 75 | 75 | 75 | | 75 |
| | A-2 | Organopolysiloxane having alkenyl group at both terminals | Viscosity at 25°C: 1000mPa-s | | | | | | | 75 | |
| | A-3 | Organopolysiloxane having OH group at both terminals and alkenyl group in side chain | Viscosity at 25°C: 150mPa-s | | | | | | | | |
| | B | Organopolysiloxane having hydrosilyl group at both terminals | Viscosity at 25°C: 70mPa-s | 25 | 25 | 25 | 25 | 25 | 25 | 25 | 25 |
| | C | Silanol group-containing polydimethylsiloxane | Viscosity at 25°C: 50mPa.s | 5 | 50 | 100 | 50 | 50 | 50 | 50 | |
| | | Polydimethylsiloxane having no silanol group | Viscosity at 25°C: 50mPa-s | | | | | 50 | | | |
| | | Silanol group-containing polymethylphenylsiloxane | Viscosity at 25°C: 150mPa.s | | | | | | | | 50 |
| | | Silanol group-containing polydimethylsiloxane | Viscosity at 25°C: 700mPa.s | | | | | | | | |
| | E-1 | Spherical alumina (particle diameter: 45 mm, BET: 0.15 m²/g) | DAW-45 | 500 | 500 | 500 | 500 | 500 | 500 | 500 | 500 |
| | E-2 | Amorphous alumina (particle diameter: 3 mm, BET: 1.9 m²/g) | SA34 | 300 | 300 | 300 | | 300 | 300 | 300 | 300 |
| | E-3 | Aluminum hydroxide (particle diameter: 10 mm, BET: 1.5 m²/g) | SBX73 | | | | 300 | | | | |
| | E-4 | Silica (BET: 200 m²/g) | AEROSI L 200 | | | | | | 3 | | |
| | F | Cross-linking agent | Viscosity at 25°C: 70mPa.s | 2 | 2 | 2 | 2 | 2 | 2 | 2 | 2 |
| | G | Polysaccharide | Starch | | | | | | | | |
| | | Silane coupling agent | SILANE 25013 VP | 5 | 5 | 5 | 5 | 5 | 5 | 5 | 5 |
| Evaluation result | | | | | | | | | | | |
| | | Test item | Suitable range | | | | | | | | |
| | | Needle penetration (1/10 mm) JIS K 6249 | 10-50 | 15 | 25 | 35 | 20 | 35 | 10 | 13 | 20 |
| | | Specific pravitv of upper portion | 2.9-3.1 | 2.93 | 2.95 | 2.96 | 2.47 | 2.91 | 2.97 | 2.97 | 2.95 |
| | | Specific gravity of lower portion | 2.9-3.1 | 3.07 | 3.05 | 3.04 | 2.53 | 3.09 | 3.03 | 3.03 | 3.05 |
| | | Precipitation prevention | ≧B | B | B | A | A | B | A | A | B |
| | | Thermal conductivity (W/mK) | > 2.0 | 2.5 | 2.3 | 2.2 | 2.2 | 2.2 | 2.3 | 2.3 | 2.3 |
| | | Adhesion | ≧ B | A | A | A | A | A | B | A | A |
| | | Pump-out ratio (%) | < 110 | 105 | 103 | 102 | 103 | 106 | 101 | 102 | 103 |
| | | Pump-out performance | ≥ B | B | A | A | A | B | A | A | A |
| | | Thermal conductivity (W/m.K) after high-temperature endurance test (200°C. 24 hours) | ≧ 2.0 | 2.5 | 2.3 | 2.2 | 2 | 2.2 | 2.3 | 2.3 | 2.3 |
| | | Thread breakage | ≧ B | A | A | A | A | B | A | A | A |
| | | Amount of low molecular weight cyclic siloxane (ppm) | ≦ 1,000 | 300 | 320 | 340 | 320 | 340 | 320 | 300 | 300 |

**[Table 2]**

| | | | | Comparative example | | | | | | | | | |
|---|---|---|---|---|---|---|---|---|---|---|---|---|---|
| | | | | 1 | 2 | 3 | 4 | 5 | 6 | 7 | 8 | 9 | 10 |
| First liquid | A-1 | Organopolysiloxane having alkenyl group at both terminals | Viscosity at 25°C: 150mPa.s | 100 | 100 | 100 | 100 | 100 | 100 | 100 | | 100 | 100 |
| | A-2 | Organopolysiloxane having alkenyl group at both terminals | Viscosity at 25°C: 1000mPa.s | | | | | | | | | | |
| | A-3 | Organopolysiloxane having OH group at both terminals and alkenyl group in side chain | Viscosity at 25°C: 150mPa.s | | | | | | | | 100 | | |
| | C | Silanol group-containing polydimethylsiloxane | Viscosity at 25°C: 50mPa.s | | 1 | 150 | | | 50 | | | | |
| | | Polydimethylsiloxane having no silanol group | Viscosity at 25°C: 50mPa.s | | | | 100 | | | | | 50 | |
| | | Silanol group-containing polymethylphenylsiloxane | Viscosity at 25°C: 150mPa.s | | | | | | | | | | |
| | | Silanol group-containing polydimethylsiloxane | Viscosity at 25°C: 700mPa.s | | | | | 50 | | | | | |
| | D | Addition reaction catalyst | Platinum catalyst | 5 | 5 | 5 | 5 | 5 | 5 | 5 | 5 | 5 | 5 |
| | E-1 | Spherical alumina (particle diameter: 45 mm, BET: 0.15 m²/g) | DAW-45 | 500 | 500 | 500 | 500 | 500 | 500 | 500 | 500 | 500 | 250 |
| | E-2 | Amorphous alumina (particle diameter: **3** mm, BET: 1.9 m²/g) | SA34 | 300 | 300 | 300 | 300 | 300 | 300 | 300 | 300 | 300 | 200 |
| | E-3 | Aluminum hydroxide (particle diameter: 10 mm, BET: 1.5 m²/g) | SBX73 | | | | | | | | | | |
| | F-4 | Silica (particle diameter: 50 nm, BET: | AEROSIL 200 | | | | | | 5 | | | 3 | |
| | G | Polysaccharide | Starch | | | | | | | 10 | | | |
| | | Silane coupling agent | SILANE 25013 VP | 5 | 5 | 5 | 5 | 5 | 5 | 5 | 5 | 5 | 5 |
| | | | | | | | | | | | | | |
| Second liqui | A-1 | Organopolysiloxane having alkenyl group at both terminals | Viscosity at 25°C: 150mPa.s | 75 | 75 | 75 | 75 | 75 | 75 | 75 | | 75 | 75 |
| | A-2 | Organopolysiloxane having alkenyl group at both terminals | Viscosity at 25°C: 1000mPa.s | | | | | | | | | | |
| | A-3 | Organopolysiloxane having OH group at both terminals and alkenyl group in side chain | Viscosity at 25°C: 150mPa.s | | | | | | | | 75 | | |
| | B | Organopolysiloxane having hydrosilyl group at both terminals | Viscosity at 25°C: 70mPa.s | 25 | 25 | 25 | 25 | 25 | 25 | 25 | 25 | 25 | 25 |
| | C | Silanol group-containing polydimethylsiloxane | Viscosity at 25°C: 50mPa.s | | 1 | 150 | | | 50 | | | | |
| | | Polydimethylsiloxane having no silanol group | Viscosity at 25°C: 50mPa.s | | | | 100 | | | | | 50 | |
| | | Silanol group-containing polymethylphenylsiloxane | Viscosity at 25°C: 150mPa.s | | | | | | | | | | |
| | | Silanol group-containing polydimethylsiloxane | Viscosity at 25°C: 700mPa.s | | | | | 50 | | | | | |
| | E-1 | Spherical alumina (particle diameter: 45 mm, BET: 0.15 m²/g) | DAW-45 | 500 | 500 | 500 | 500 | 500 | 500 | 500 | 500 | 500 | 250 |
| | E-2 | Amorphous alumina (particle diameter: **3** mm, BET: 1.9 m²/g) | SA34 | 300 | 300 | 300 | 300 | 300 | 300 | 300 | 300 | 300 | 200 |
| | E-3 | Aluminum hydroxide (particle diameter: 10 mm, BET: 1.5 m²/g) | SBX73 | | | | | | | | | | |
| | E-4 | Silica (BET: 200 m²/g) | AEROSIL 200 | | | | | | 5 | | | 5 | |
| | F | Cross-linking agent | Viscosity at 25°C: 70mPa.s | 2 | 2 | 2 | 2 | 2 | 2 | | | 2 | 2 |
| | G | Polysaccharide | Starch | | | | | | | 10 | | | |
| | | Silane coupling agent | SILANE 25013 VP | 5 | 5 | 5 | 5 | 5 | 5 | 5 | 5 | 5 | 5 |
| | | | | | | | | | | | | | |
| valuation resul' | Test item | Suitable range | | | | | | | | | | | |
| | Needle penetration (1/10 mm) JIS K 6249 | 10-50 | 3 | 5 | 55 | 40 | 8 | 2 | 20 | 8 | 9 | 40 | |
| | Specific gravity of upper portion | 2.9-3.1 | 2,8 | 2,85 | 2,97 | 2,75 | 2,88 | 2,97 | 2,95 | 2,96 | 2,95 | 2,45 | |
| | Specific gravity of lower portion | 2.9-3.1 | 3,2 | 3,15 | 3,03 | 3,25 | 3,12 | 3,03 | 3,05 | 3,04 | 3,05 | 2,55 | |
| | Precipitation prevention | ≧ B | D | C | A | D | C | A | B | A | B | B | |
| | Thermal conductivity (W/m.K) | > 2.0 | 2,5 | 2,5 | 2,1 | 2,2 | 2,3 | 2,5 | 2,5 | 2,3 | 2,3 | 1,8 | |
| | Adhesion | ≧ B | A | A | A | A | A | C | 2,5 | A | C | A | |
| | Pump-out ratio (%) | < 110 | 110 | 107 | 101 | 120 | 112 | 101 | 105 | 102 | 106 | 112 | |
| | Pump-out performance | ≧ B | C | B | A | D | C | A | B | A | B | C | |
| | Thermal conductivity (W/m.K) after high-temperature endurance test (200°C, 24 hours) | ≧ 2.0 | 2,5 | 2,5 | 2,1 | 2,2 | 2,3 | 2,5 | 1,8 | 2,3 | 2,3 | 1,8 | |
| | Thread breakage | ≧ B | C | B | A | C | A | A | A | A | A | C | |
| | Amount of low molecular weight cyclic siloxane (ppm) | ≦ 1,000 | 300 | 300 | 360 | 340 | 300 | 320 | 300 | 340 | 320 | 320 | |

## Claims

1. A thermally conductive silicone composition comprising:
a component (A) that is an alkenyl group-containing organopolysiloxane;
a component (B) that is an organopolysiloxane having two or more hydrosilyl groups within one molecule;
a component (C) that is a silanol group-containing organopolysiloxane having a viscosity, at 25°C, of 10 mPa·s or more and 500 mPa·s or less, and wherein a content of the component (C) is 5 parts by mass or more and 100 parts by mass or less relative to 100 parts by mass of the total amount of the components (A) and (B), and the content of the silanol group in the component (C) is 1% by mass to 8% by mass relative to 100% by mass of the total content of the component (C) ;
a component (D) that is an addition reaction catalyst;
a component (E) that is at least one or more types of thermally conductive filler selected from the group consisting of a metal, a metal oxide, a metal hydroxide, a metal nitride, and a metal carbide, the thermally conductive filler having a BET specific surface area of 30 m²/g or less and an average particle diameter of 1 to 100 µm; and
a component (F) that is a cross-linking agent, wherein
the component (C) is contained in an amount of 3 parts by mass or more relative to 100 parts by mass of a total amount of the components (A) and (B),
a content of a filler having a BET specific surface area of 50 m²/g or more in the composition is 3 parts by mass or less relative to 100 parts by mass of the total amount of the components (A) and (B), where viscosity, particle diameter and BET specific surface area are determined in accordance with the methods indicated in the description.

2. The thermally conductive silicone composition according to claim 1, wherein the component (C) is a linear organopolysiloxane having neither alkenyl group nor hydrosilyl group and having at least one silanol group at both molecular chain terminals.

3. The thermally conductive silicone composition according to claim 1 or 2, wherein a content of the silanol group in the component (C) is 1% by mass or more and 10% by mass or less.

4. The thermally conductive silicone composition according to claim 1 or 2, wherein a content of the component (E) is 500 parts by mass or more and 2,000 parts by mass or less relative to 100 parts by mass of the total amount of the components (A) and (B).

5. The thermally conductive silicone composition according to claim 1 or 2, wherein the component (E) is at least one selected from the group consisting of aluminum oxide, aluminum hydroxide, magnesium oxide, magnesium hydroxide, zinc oxide, aluminum nitride, and boron nitride.

6. The thermally conductive silicone composition according to claim 1 or 2, wherein the component (F) has at least one hydrogen atom (hydrosilyl group) bonded to a silicon atom in a side chain, and the number of hydrosilyl groups within one molecule of the component (F) is 3 or more.

7. The thermally conductive silicone composition according to claim 1 or 2, wherein the thermally conductive silicone composition forms, after curing, a cured product that has a needle penetration of 10 or more and 50 or less in accordance with JIS K6249.

8. The thermally conductive silicone composition according to claim 1 or 2, wherein the thermally conductive silicone composition forms, after curing, a cured product that has a thermal conductivity of 2.0 W/m·K or more after curing, where thermal conductivity is determined in accordance with the method indicated in the description.

9. The thermally conductive silicone composition according to claim 1 or 2, wherein a total content of octamethylcyclotetrasiloxane (D4), decamethylcyclopentasiloxane (D5) and dodecamethylcyclohexasiloxane (D6), tetradecamethylcycloheptasiloxane (D7), and hexadecamethylcyclooctasiloxane (D8) is less than 0.1 parts by mass relative to 100 parts by mass of the total amount of the components (A) and (B).

10. A method for producing the thermally conductive silicone composition according to claim 1 comprising:
a first step of mixing the component (A) that is an alkenyl group-containing organopolysiloxane, the component (C) that is a silanol group-containing organopolysiloxane having a viscosity, at 25°C, of 10 mPa·s or more and 500 mPa·s or less, and wherein a content of the component (C) is 5 parts by mass or more and 100 parts by mass or less relative to 100 parts by mass of the total amount of the components (A) and (B), and the content of the silanol group in the component (C) is 1% by mass to 8% by mass relative to 100% by mass of the total content of the component (C), the component (E) that is a thermally conductive filler, and the component (D) that is an addition reaction catalyst to obtain a first liquid; and
a second step of mixing the component (A) that is an alkenyl group-containing organopolysiloxane, the component (B) that is an organopolysiloxane having two or more hydrosilyl groups within one molecule, the component (C) that is a silanol group-containing organopolysiloxane having a viscosity, at 25°C, of 10 mPa·s or more and 500 mPa·s or less, the component (E) that is a thermally conductive filler, and the component (F) that is a cross-linking agent to obtain a second liquid, thereby producing a two-component thermally conductive silicone composition, where viscosity is determined in accordance with the method indicated in the description.

11. A method for producing a thermally conductive member, comprising:
a mixing step of mixing the first liquid and the second liquid of the two-component thermally conductive silicone composition according to claim 10 to obtain a mixture;
an application step of applying the resulting mixture of the first liquid and the second liquid, obtained in the mixing step, to a substrate; and
a curing step of curing the uncured mixture applied in the application step.

12. The method for producing a thermally conductive member according to claim 11, wherein the thermally conductive member is used as a gap filler.

13. A method for reducing hardness of a cured product obtained by curing a thermally conductive silicone composition, the method comprising:
adding a component (C) that is a silanol group-containing organopolysiloxane having a viscosity, at 25°C, of 10 mPa·s or more and 500 mPa·s or less to the thermally conductive silicone composition, and wherein a content of the component (C) is 5 parts by mass or more and 100 parts by mass or less relative to 100 parts by mass of the total amount of the components (A) and (B), and the content of the silanol group in the component (C) is 1% by mass to 8% by mass relative to 100% by mass of the total content of the component (C),
the thermally conductive silicone composition including
a component (A) that is an alkenyl group-containing organopolysiloxane,
a component (B) that is an organopolysiloxane having two or more hydrosilyl groups within one molecule,
a component (D) that is an addition reaction catalyst,
a component (E) that is at least one or more types of thermally conductive filler selected from the group consisting of a metal, a metal oxide, a metal hydroxide, a metal nitride, and a metal carbide, the thermally conductive filler having a BET specific surface area of 30 m²/g or less and an average particle diameter of 1 to 100 µm, and
a component (F) that is a cross-linking agent, where viscosity, particle diameter and BET specific surface area are determined in accordance with the methods indicated in the description.

## Patentansprüche

1. Wärmeleitfähige Silikonzusammensetzung, umfassend:
eine Komponente (A), bei der es sich um ein alkenylgruppenhaltiges Organopolysiloxan handelt;
eine Komponente (B), bei der es sich um ein Organopolysiloxan mit zwei oder mehr Hydrosilylgruppen in einem Molekül handelt;
eine Komponente (C), bei der es sich um ein silanolgruppenhaltiges Organopolysiloxan mit einer Viskosität bei 25 °C von 10 mPa·s oder mehr und 500 mPa·s oder weniger handelt und wobei ein Gehalt der Komponente (C) 5 Masseteile oder mehr und 100 Masseteile oder weniger, bezogen auf 100 Masseteile der Gesamtmenge der Komponenten (A) und (B), beträgt und der Gehalt der Silanolgruppe in der Komponente (C) 1 Masse-% bis 8 Masse-%, bezogen auf 100 Masse-% des Gesamtgehalts der Komponente (C), beträgt;
eine Komponente (D), bei der es sich um einen Additionsreaktionskatalysator handelt;
eine Komponente (E), bei der es sich um mindestens einen oder mehrere Typen von wärmeleitfähigem Füllstoff handelt, die aus der Gruppe bestehend aus einem Metall, einem Metalloxid, einem Metallhydroxid, einem Metallnitrid und einem Metallcarbid ausgewählt sind, wobei der wärmeleitfähige Füllstoff eine spezifische BET-Oberfläche von 30 m²/g oder weniger und einen mittleren Teilchendurchmesser von 1 bis 100 µm aufweist; und
eine Komponente (F), bei der es sich um ein Vernetzungsmittel handelt, wobei die Komponente (C) in einer Menge von 3 Masseteilen oder mehr, bezogen auf 100 Masseteile einer Gesamtmenge der Komponenten (A) und (B), enthalten ist,
ein Gehalt eines Füllstoffs mit einer spezifischen BET-Oberfläche von 50 m²/g oder mehr in der Zusammensetzung 3 Masseteile oder weniger, bezogen auf 100 Masseteile der Gesamtmenge der Komponenten (A) und (B), beträgt, wobei Viskosität, Teilchendurchmesser und spezifische BET-Oberfläche gemäß den in der Beschreibung angegebenen Methoden bestimmt werden.

2. Wärmeleitfähige Silikonzusammensetzung nach Anspruch 1, wobei es sich bei der Komponente (C) um ein lineares Organopolysiloxan, das weder Alkenylgruppen noch Hydrosilylgruppen aufweist und mindestens eine Silanolgruppe an beiden Molekülkettenenden aufweist, handelt.

3. Wärmeleitfähige Silikonzusammensetzung nach Anspruch 1 oder 2, wobei ein Gehalt der Silanolgruppe in der Komponente (C) 1 Masse-% oder mehr und 10 Masse-% oder weniger beträgt.

4. Wärmeleitfähige Silikonzusammensetzung nach Anspruch 1 oder 2, wobei ein Gehalt der Komponente (E) 500 Masseteile oder mehr und 2000 Masseteile oder weniger, bezogen auf 100 Masseteile der Gesamtmenge der Komponenten (A) und (B), beträgt.

5. Wärmeleitfähige Silikonzusammensetzung nach Anspruch 1 oder 2, wobei es sich bei der Komponente (E) mindestens um eines handelt, das aus der Gruppe bestehend aus Aluminiumoxid, Aluminiumhydroxid, Magnesiumoxid, Magnesiumhydroxid, Zinkoxid, Aluminiumnitrid und Bornitrid ausgewählt ist.

6. Wärmeleitfähige Silikonzusammensetzung nach Anspruch 1 oder 2, wobei die Komponente (F) mindestens ein an ein Siliciumatom gebundenes Wasserstoffatom (Hydrosilylgruppe) in einer Seitenkette aufweist und die Zahl der Hydrosilylgruppen in einem Molekül der Komponente (F) 3 oder mehr beträgt.

7. Wärmeleitfähige Silikonzusammensetzung nach Anspruch 1 oder 2, wobei die wärmeleitfähige Silikonzusammensetzung nach dem Härten ein gehärtetes Produkt bildet, das eine Nadelpenetration von 10 oder mehr und 50 oder weniger gemäß JIS K6249 aufweist.

8. Wärmeleitfähige Silikonzusammensetzung nach Anspruch 1 oder 2, wobei die wärmeleitfähige Silikonzusammensetzung nach dem Härten ein gehärtetes Produkt mit einer Wärmeleitfähigkeit von 2,0 W/m·K oder mehr nach dem Härten aufweist, wobei die Wärmeleitfähigkeit gemäß der in der Beschreibung angegebenen Methode bestimmt wird.

9. Wärmeleitfähige Silikonzusammensetzung nach Anspruch 1 oder 2, wobei eine Gesamtmenge von Octamethylcyclotetrasiloxan (D4), Decamethylcyclopentasiloxan (D5) und Dodecamethylcyclohexasiloxan (D6), Tetradecamethylcycloheptasiloxan (D7) und Hexadecamethylcyclooctasiloxan (D8) weniger als 0,1 Masseteile, bezogen auf 100 Masseteile der Gesamtmenge der Komponenten (A) und (B) beträgt.

10. Verfahren zur Herstellung der wärmeleitfähigen Silikonzusammensetzung nach Anspruch 1, umfassend:
einen ersten Schritt des Mischens der Komponente (A), bei der es sich um ein alkenylgruppenhaltiges Organopolysiloxan handelt, der Komponente (C), bei der es sich um ein silanolgruppenhaltiges Organopolysiloxan mit einer Viskosität bei 25 °C von 10 mPa·s oder mehr und 500 mPa·s oder weniger handelt und wobei ein Gehalt der Komponente (C) 5 Masseteile oder mehr und 100 Masseteile oder weniger, bezogen auf 100 Masseteile der Gesamtmenge der Komponenten (A) und (B), beträgt und der Gehalt der Silanolgruppe in der Komponente C) 1 Masse-% bis 8 Masse-%, bezogen auf 100 Masse-% des Gesamtgehalts der Komponente (C), beträgt, der Komponente (E), bei der es sich um einen wärmeleitfähigen Füllstoff handelt, und der Komponente (D), bei der es sich um einen Additionsreaktionskatalysator handelt, unter Erhalt einer ersten Flüssigkeit; und
einen zweiten Schritt des Mischens der Komponente (A), bei der es sich um ein alkenylgruppenhaltiges Organopolysiloxan handelt, der Komponente (B), bei der es sich um ein Organopolysiloxan mit zwei oder mehr Hydrosilylgruppen in einem Molekül handelt, der Komponente (C), bei der es sich um ein silanolgruppenhaltiges Organopolysiloxan mit einer Viskosität bei 25 °C von 10 mPa·s oder mehr und 500 mPa·s oder weniger handelt, der Komponente (E), bei der es sich um einen wärmeleitfähigen Füllstoff handelt, und der Komponente (F), bei der es sich um ein Vernetzungsmittel handelt, unter Erhalt einer zweiten Flüssigkeit, wodurch eine zweikomponentige wärmeleitfähige Silikonzusammensetzung erhalten wird, wobei die Viskosität gemäß der in der Beschreibung angegebenen Methode bestimmt wird.

11. Verfahren zur Herstellung eines wärmeleitfähigen Elements, umfassend:
einen Mischschritt des Mischens der ersten Flüssigkeit und der zweiten Flüssigkeit der zweikomponentigen wärmeleitfähigen Silikonzusammensetzung nach Anspruch 10 unter Erhalt einer Mischung;
einen Aufbringungsschritt des Aufbringens der resultierenden Mischung der ersten Flüssigkeit und der zweiten Flüssigkeit, die im Mischschritt erhalten wurde, auf ein Substrat; und
einen Härtungsschritt des Härtens der im Aufbringungsschritt aufgebrachten ungehärteten Mischung.

12. Verfahren zur Herstellung eines wärmeleitfähigen Elements nach Anspruch 11, wobei das wärmeleitfähige Element als Gap Filler verwendet wird.

13. Verfahren zur Verringerung der Härte eines durch Härten einer wärmeleitfähigen Silikonzusammensetzung erhaltenen gehärteten Produkts, wobei das Verfahren Folgendes umfasst:
Zugeben einer Komponente (C), bei der es sich um ein silanolgruppenhaltiges Organopolysiloxan mit einer Viskosität bei 25 °C von 10 mPa·s oder mehr und 500 mPa·s oder weniger handelt, zu der wärmeleitfähigen Silikonzusammensetzung, und wobei ein Gehalt der Komponente (C) 5 Masseteile oder mehr und 100 Masseteile oder weniger, bezogen auf 100 Masseteile der Gesamtmenge der Komponenten (A) und (B), beträgt und der Gehalt der Silanolgruppe in der Komponente (C) 1 Masse-% bis 8 Masse-%, bezogen auf 100 Masse-% des Gesamtgehalts der Komponente (C), beträgt,
wobei die wärmeleitfähige Silikonzusammensetzung Folgendes enthält:
eine Komponente (A), bei der es sich um ein alkenylgruppenhaltiges Organopolysiloxan handelt,
eine Komponente (B), bei der es sich um ein Organopolysiloxan mit zwei oder mehr Hydrosilylgruppen in einem Molekül handelt,
eine Komponente (D), bei der es sich um einen Additionsreaktionskatalysator handelt,
eine Komponente (E), bei der es sich um mindestens einen oder mehrere Typen von wärmeleitfähigem Füllstoff handelt, die aus der Gruppe bestehend aus einem Metall, einem Metalloxid, einem Metallhydroxid, einem Metallnitrid und einem Metallcarbid ausgewählt sind, wobei der wärmeleitfähige Füllstoff eine spezifische BET-Oberfläche von 30 m²/g oder weniger und einen mittleren Teilchendurchmesser von 1 bis 100 µm aufweist, und
eine Komponente (F), bei der es sich um ein Vernetzungsmittel handelt, wobei Viskosität, Teilchendurchmesser und spezifische BET-Oberfläche gemäß den in der Beschreibung angegebenen Methoden bestimmt werden.

## Revendications

1. Composition de silicone thermoconductrice comprenant :
un composant (A) qui est un organopolysiloxane contenant un groupe alcényle ;
un composant (B) qui est un organopolysiloxane ayant deux ou plusieurs groupes hydrogénosilyle au sein d'une molécule ;
un composant (C) qui est un organopolysiloxane contenant un groupe silanol ayant une viscosité, à 25 °C, de 10 mPa·s ou plus et de 500 mPa·s ou moins, et une teneur du composant (C) étant de 5 parties en masse ou plus et de 100 parties en masse ou moins par rapport à 100 parties en masse de la quantité totale des composants (A) et (B), et la teneur du groupe silanol dans le composant (C) étant de 1 % en masse à 8 % en masse par rapport à 100 % en masse de la teneur totale du composant (C);
un composant (D) qui est un catalyseur de réaction d'addition ;
un composant (E) qui est au moins un ou plusieurs types de charge thermoconductrice choisie dans le groupe constitué par un métal, un oxyde métallique, un hydroxyle métallique, un nitrure métallique et un carbure métallique, la charge thermoconductrice ayant une surface spécifique BET de 30 m²/g ou moins et un diamètre moyen de particule de 1 à 100 µm ; et
un composant (F) qui est un agent de réticulation, le composant (C) étant contenu en une quantité de 3 parties en masse ou plus par rapport à 100 parties en masse d'une quantité totale des composants (A) et (B),
une teneur d'une charge ayant une surface spécifique BET de 50 m²/g ou plus dans la composition est de 3 parties en masse ou moins par rapport à 100 parties en masse de la quantité totale des composants (A) et (B), la viscosité, le diamètre des particules et la surface spécifique BET étant déterminés conformément aux procédés indiqués dans la description.

2. Composition de silicone thermoconductrice selon la revendication 1, dans laquelle le composant (C) est un organopolysiloxane linéaire n'ayant ni groupe alcényle ni groupe hydrogénosilyle et ayant au moins un groupe silanol aux deux terminaisons de chaîne moléculaire.

3. Composition de silicone thermoconductrice selon la revendication 1 ou 2, dans laquelle une teneur du groupe silanol dans le composant (C) est de 1 % en masse ou plus et de 10 % en masse ou moins.

4. Composition de silicone thermoconductrice selon la revendication 1 ou 2, dans laquelle une teneur du composant (E) est de 500 parties en masse ou plus et 2 000 parties en masse ou moins par rapport à 100 parties en masse de la quantité totale des composants (A) et (B).

5. Composition de silicone thermoconductrice selon la revendication 1 ou 2, dans laquelle le composant (E) est au moins l'un choisi dans le groupe constitué par l'oxyde d'aluminium, l'hydroxyde d'aluminium, l'oxyde de magnésium, l'hydroxyde de magnésium, l'oxyde de zinc, le nitrure d'aluminium, et le nitrure de bore.

6. Composition de silicone thermoconductrice selon la revendication 1 ou 2, dans laquelle le composant (F) a au moins un atome d'hydrogène (groupe hydrogénosilyle) lié à un atome de silicium dans une chaîne latérale, et le nombre de groupes hydrogénosilyle dans une molécule du composant (F) est de 3 ou plus.

7. Composition de silicone thermoconductrice selon la revendication 1 ou 2, dans laquelle la composition de silicone thermoconductrice forme, après durcissement, un produit durci qui a une pénétration d'aiguille de 10 ou plus et de 50 ou moins conformément à la norme JIS K6249.

8. Composition de silicone thermoconductrice selon la revendication 1 ou 2, dans laquelle la composition de silicone thermoconductrice forme, après durcissement, un produit durci qui a une conductivité thermique de 2,0 W/m·K ou plus après durcissement, où la conductivité thermique est déterminée conformément au procédé indiqué dans la description.

9. Composition de silicone thermoconductrice selon la revendication 1 ou 2, dans laquelle une teneur totale en octaméthylcyclotétrasiloxane (D4), décaméthylcyclopentasiloxane (D5) et dodécaméthylcyclohexasiloxane (D6), tétradécaméthylcycloheptasiloxane (D7), et hexadécaméthylcyclooctasiloxane (D8) est inférieur à 0,1 parties en masse par rapport à 100 parties en masse de la quantité totale des composants (A) et (B).

10. Procédé de production de la composition de silicone thermoconductrice selon la revendication 1 comprenant :
une première étape de mélange du composant (A) qui est un organopolysiloxane contenant un groupe alcényle, le composant (C) qui est un organopolysiloxane contenant un groupe silanol ayant une viscosité, à 25 °C, de 10 mPa·s ou plus et de 500 mPa·s ou moins, et dans lequel une teneur en composant (C) est de 5 parties en masse ou plus et de 100 parties en masse ou moins par rapport à 100 parties en masse de la quantité totale des composants (A) et (B), et la teneur du groupe silanol dans le composant (C) est de 1 % en masse à 8 % en masse par rapport à 100 % en masse de la teneur totale du composant (C), le composant (E) qui est une charge conductrice thermique, et le composant (D) qui est un catalyseur de réaction d'addition pour obtenir un premier liquide ; et
une deuxième étape de mélange du composant (A) qui est un organopolysiloxane contenant un groupe alcényle, le composant (B) qui est un organopolysiloxane ayant deux ou plusieurs groupes hydrogénosilyle au sein d'une molécule, le composant (C) qui est un organopolysiloxane à groupe silanol ayant une viscosité, à 25 °C, de 10 mPa·s ou plus et 500 mPa·s ou moins, le composant (E) qui est une charge thermoconductrice, et le composant (F) qui est un agent de réticulation pour obtenir un second liquide, produisant ainsi une composition de silicone thermoconductrice à deux composants, la viscosité étant déterminée selon le procédé indiqué dans la description.

11. Procédé pour la production d'un élément thermoconducteur, comprenant :
une étape de mélange où l'on mélange le premier liquide et le second liquide de la composition de silicone thermoconductrice à deux composants selon la revendication 10 pour obtenir un mélange ;
une étape d'application où l'on applique le mélange résultant du premier liquide et du second liquide, obtenu à l'étape de mélange, sur un substrat ; et
une étape de durcissement où l'on durcit le mélange non durci appliqué dans l'étape d'application.

12. Procédé pour la production d'un élément thermoconducteur selon la revendication 11, dans lequel l'élément thermoconducteur est utilisé comme charge d'espacement.

13. Procédé pour la réduction de la dureté d'un produit durci obtenu par durcissement d'une composition de silicone thermoconductrice, le procédé comprenant :
l'ajout d'un composant (C) qui est un organopolysiloxane contenant un groupe silanol ayant une viscosité à 25 °C de 10 mPa·s ou plus et 500 mPa·s ou moins à la composition de silicone thermoconductrice, et une teneur en composant (C) étant de 5 parties en masse ou plus et de 100 parties en masse ou moins par rapport à 100 parties en masse de la quantité totale des composants (A) et (B), et la teneur du groupe silanol dans le composant (C) étant de 1 % en masse à 8 % en masse par rapport à 100 % en masse de la teneur totale du composant (C),
la composition de silicone thermoconductrice comprenant un composant (A) qui est un organopolysiloxane contenant un groupe alcényle,
un composant (B) qui est un organopolysiloxane ayant deux ou plusieurs groupes hydrogénosilyle au sein d'une molécule,
un composant (D) qui est un catalyseur de réaction d'addition,
un composant (E) qui est au moins un ou plusieurs types de charge thermoconductrice choisie dans le groupe constitué par un métal, un oxyde métallique, un hydroxyle métallique, un nitrure métallique et un carbure métallique, la charge thermoconductrice ayant une surface spécifique BET de 30 m²/g ou moins et un diamètre moyen de particule de 1 à 100 µm, et
un composant (F) qui est un agent de réticulation, où la viscosité, le diamètre de particule et la surface spécifique BET sont déterminés conformément aux procédés indiqués dans la description.
